# EUROPÄISCHE PATENTSCHRIFT

(11) **EP 1 344 046 B1**
(45) Veröffentlichungstag und Bekanntmachung des Hinweises auf die Patenterteilung: **05.12.2007**
(21) Anmeldenummer: 01271530.6
(22) Anmeldetag: 14.12.2001
(51) Int. Cl.: G01N 21/35, G02B 6/12

(54) **VORRICHTUNG UND VERFAHREN ZUR ANALYSE DER QUALITATIVEN UND/ODER QUANTITATIVEN ZUSAMMENSETZUNG VON FLUIDEN**
DEVICE AND METHOD FOR ANALYSING THE QUALITATIVE AND/OR QUANTITATIVE COMPOSITION OF LIQUIDS
PROCEDE ET DISPOSITIF POUR ANALYSER LA COMPOSITION QUALITATIVE ET/OU QUANTITATIVE DE FLUIDES

(30) Priorität: 18.12.2000 DE 10063151
(43) Veröffentlichungstag der Anmeldung: 17.09.2003
(73) Patentinhaber: Fraunhofer-Gesellschaft zur Förderung der angewandten Forschung e.V., 80686 München (DE); Max-Planck-Gesellschaft zur Förderung der Wissenschaften e.V., 80539 München (DE)
(72) Erfinder: FEISST, Arno, 79254 Oberried (DE); LAMBRECHT, Armin, 79232 March (DE); WEHRSPOHN, Ralf, 06108 Halle (DE); MÜLLER, Frank, 72766 Reutlingen (DE); SCHILLING, Jörg, Dr., Pasadena, CA 91101 (US)
(74) Vertreter: Grünecker, Kinkeldey, Stockmair & Schwanhäusser Anwaltssozietät
(86) Internationale Anmeldenummer: PCT/EP2001/014802
(87) Internationale Veröffentlichungsnummer: WO 2002/050514

(56) Entgegenhaltungen:
- US-A- 3 792 272
- US-A- 5 371 367
- US-A- 5 751 466
- US-A- 6 028 693
- MULLONI V, PAVESI L: "Porous silicon microcavities as optical chemical sensors" APPLIED PHYSICS LETTERS, Bd. 76, Nr. 18, 1. Mai 2000 (2000-05-01), Seiten 2523-2525, XP012025167

## Beschreibung

Die Erfindung betrifft eine Vorrichtung zur Analyse der qualitativen und/oder quantitativen Zusammensetzung von Fluiden mit zumindest einer Lichtquelle, zumindest einem Wechselwirkungsraumgebiet, in dem eine Wechselwirkung zwischen Licht und Fluid möglich ist, und zumindest einer Detektionseinrichtung zur Erfassung der Wechselwirkung zwischen dem Fluid und dem Licht.

Bekannt sind Verfahren und Vorrichtungen, bei denen zur Analyse der Zusammensetzung von Fluiden die spezifische Absorption von elektromagnetischer Strahlung durch die verschiedenen Komponenten des Fluids ausgenutzt wird. So weisen viele Gase wie z.B. CO, CO₂ oder CH₄ charakteristische Absorptionslinien und hierbei insbesondere im Infrarotbereich auf. Eine sehr empfindliche Detektion auch von Spurengasen ist mit der Absorptionsmethode möglich. Nachteilig ist hierbei jedoch, dass zur Erreichung hoher Empfindlichkeit ausgedehnte Wechselwirkungsbereiche zur Verfügung gestellt werden müssen, in denen die Absorption der elektromagnetischen Strahlung durch das Fluid stattfinden kann. Nur durch eine lange Wechselwirkungszeit des Lichts mit dem Fluid ergibt sich ein ausreichendes Signal- zu Rauschverhältnis, mit dem eine qualitative und/oder quantitative Analyse der Zusammensetzung von Fluiden möglich ist. Die großen Raumbereiche stehen vielen Anwendungen entgegen, bei denen eine Miniaturisierung der Sensoren nötig ist. Hierbei sei insbesondere beispielsweise auf den Automobilbaubereich verwiesen.

Andere Sensorprinzipien wie elektrochemische Zellen oder Halbleitergassensoren weisen den Nachteil auf, dass bestimmte Querempfindlichkeiten gegenüber anderen Gaskomponenten oder auch z.B. gegenüber Luftfeuchtigkeit bestehen. Derartige Gassensoren können nicht die hohe Präzision und Selektivität von optischen Absorptionsmethoden gewährleisten.

Die optischen Absorptionsverfahren lassen sich in nichtdispersive, dispersive und laserspektroskopische Messverfahren einteilen. Bei den nichtdispersiven Vorrichtungen und Verfahren wird die Absorption einer einzelnen Wellenlänge detektiert. Oftmals wird hierbei auch noch eine Referenzwellenlänge benutzt, bei der keine charakteristische Absorption auftritt. Insbesondere solche Geräte weisen die oben aufgeführten Nachteile bezüglich des großen Wechselwirkungsraumbereichs auf. Dispersive Vorrichtungen und Verfahren, bei denen eine spektrale Abhängigkeit der Fluidabsorption gemessen wird, zeichnen sich durch teure optische Komponenten wie ein Prisma oder ein Gitter aus. Ebenso besteht hierbei die Notwendigkeit, mit mehreren Detektoren verschiedene Wellenlängen zu detektieren, was aus Kostengesichtspunkten einen großen Nachteil darstellt.

Vielfach wird durch Multireflexionsanordnungen eine Verlängerung der Wechselwirkungszeit des Lichts mit dem Fluid realisiert. Diese optischen Anordnungen sind jedoch teuer und erfordern eine genaue Justage.

Bei den laserspektroskopischen Verfahren und Vorrichtungen wird ein Laser schnell über eine Fluidabsorptionslinie abgestimmt und so ein bestimmter Bestandteil des Fluids qualitativ oder quantitativ bestimmt. Jedoch sind die Komponenten, die solche Verfahren erlauben, insbesondere spezielle Laserdioden hierzu vergleichsweise teuer.

Auch hier ist die Wechselwirkungszeit des Lichtes mit dem Fluid für die Nachweisempfindlichkeit entscheidend.

In V. Mulloni und L. Pavesi: "Porous silicon microcavities as optical chemical sensors", Appl. Phys. Lett., vol. 76, no. 6, 1 May 2000, pp. 2523-2525, wird von der Nutzung der Luminiszenzeigenschaften von porösen Silizium-Mikrokavitäten berichtet, um chemische Stoffe zu analysieren.

Aufgabe der vorliegenden Erfindung ist es daher, eine Vorrichtung und ein Verfahren zur Analyse der qualitativen und/oder quantitativen Zusammensetzung von Fluiden zu schaffen, welches preisgünstig zu realisieren ist und nur einen geringen Raumbedarf aufweist.

Diese Aufgabe wird durch eine Vorrichtung mit den Merkmalen des Anspruchs 1 und durch ein Verfahren mit den Merkmalen des Anspruchs 62 gelöst.

Bei der erfindungsgemäßen Vorrichtung wird die spezifische optische Absorption von zu analysierenden Fluidkomponenten ausgenutzt. Die Wechselwirkungsdauer des Lichts mit dem Fluid wird mit Hilfe einer photonischen Bandgap-Struktur erhöht.

Dadurch ist es möglich, die Selektivität und Empfindlichkeit einer optischen Absorptionsmethode zu verwenden, jedoch gleichzeitig bei nur einem sehr geringen Raumbedarf eine lange Wechselwirkungszeit des Lichts mit dem Fluid zu gewährleisten.

Eine photonische Bandgap-Struktur zeichnet sich durch zumindest in einer Raumrichtung periodische Variation des optischen Brechungsindexes aus. Ähnlich wie für Elektronenwellen in einem Festkörper, d.h. in einem periodischen Potential, ergibt sich für die Propagation von Licht in einem Medium mit einem periodischen Brechungsindex eine Bandstruktur, welche unter anderem auch eine Bandlücke ("Bandgap") aufweisen kann. Die Dispersionsrelation (ω(k)) ist deutlich von der von elektromagnetischer Strahlung im Vakuum oder in einem Propagationsmedium verschieden. Insbesondere nahe des Bandgaps treten Bandverbiegungen auf, d.h. für bestimmte Wellenlängen und Frequenzbereiche treten in der Bandstruktur insbesondere in der Nähe des Bandgaps sehr flache Bereiche auf. Die Steigung der Dispersionsrelation Δω/Δk ergibt die Gruppengeschwindigkeit V_{gr}. Daher ergibt sich insbesondere in den Bereichen nahe des Bandgaps aufgrund der Brechungsindexperiodizität der photonischen Bandgap-Struktur in der Nähe des Bandgaps eine im Vergleich zum Vakuum deutlich reduzierte Gruppengeschwindigkeit. Die Reduktion der Gruppengeschwindigkeit durch die Periodizität des Brechungsindex der photonischen Bandgap-Struktur geht in der Regel deutlich über die Reduktion der Gruppengeschwindigkeit alleine durch das Vorhandensein eines Materials mit einem Brechungsindex von 1 verschieden hinaus.

Die Gruppengeschwindigkeit gibt an, mit welcher Geschwindigkeit sich der Schwerpunkt eines Wellenpakets in einem Medium ausbreitet. Damit wird klar, dass für diejenigen Wellenlängen und Frequenzen, bei denen eine flache Bandstruktur vorliegt, eine langsame Propagation in der photonischen Bandgap-Struktur erfolgt, und sich somit die Möglichkeit ergibt, das Licht in einem kleinen Raumbereich über einen vergleichsweise langen Zeitraum mit einem Fluid wechselwirken zu lassen.

Da in photonischen Bandgap-Strukturen Bereiche mit einer Gruppengeschwindigkeit von null vorliegen, und diese kontinuierlich in eine "lineare" Dispersionsrelation mit endlicher Steigung übergehen, ist eine Reduktion der Gruppengeschwindigkeit im Vergleich zum Vakuum um einen beliebigen Faktor möglich.

Aus physikalischen Gründen müssen die Perioden der eingesetzten Strukturen im Bereich der interessierenden Wellenlänge liegen, d.h. z.B. für mittleres Infrarot Periodizitäten im Bereich 0,5 µm bis 15 µm.

Eine vorteilhafte Ausführungsform der Erfindung besteht darin, dass die Lichtquelle polychromatisch ist. Dadurch dass Licht mit verschiedenen Wellenlängen durch die Lichtquelle zur Verfügung gestellt wird, ist es möglich, die Absorption des Fluids in verschiedenen Wellenlängenbereichen zu ermitteln und somit die Zusammensetzung des Fluids in bezug auf verschiedene Komponenten gleichzeitig zu ermitteln.

Eine andere vorteilhafte Ausführungsform der Erfindung besteht darin, dass die Lichtquelle monochromatisch ist. Wird die Wellenlänge des Lichts entsprechend einer Absorptionslinie eines zu analysierenden Fluidbestandteils gewählt, so ist es möglich, mit kostengünstigen optischen Komponenten den hochsensiblen Sensor für eine bestimmte Fluidkomponente zu optimieren.

Eine vorteilhafte Ausführungsform der Erfindung besteht darin, dass die Lichtquelle eine Glühlampe, eine lichtemittierende Diode, einen Laser, eine Laserdiode, Quanten-Kaskaden-Laser (QCL), eine Lumineszenzlichtquelle, einen selektiven thermischen Strahler oder einen schwarzen Strahler umfasst. Eine Glühlampe, eine lichtemittierende Diode, eine Lumineszenzlichtquelle, ein selektiver thermischer Strahler oder ein schwarzer Strahler kennzeichnen sich durch ihre Kostengünstigkeit. Eine Glühlampe, eine Lumineszenzlichtquelle, ein selektiver thermischer Strahler oder ein schwarzer Strahler kennzeichnen sich durch ein vorteilhafterweise teilweise kontinuierliches Emissionsspektrum. Ein Laser oder eine Laserdiode kennzeichnen sich vorteilhaftennreise durch ihr extrem schmalbandiges, scharfes Emissionsspektrum. Die Laserdiode weist hierbei vorteilhafterweise gegenüber anderen Lasern in der Regel deutlich niedrigere Preise auf. Die Glühlampe, die lichtemittierende Diode, der Laser, die Laserdiode, die Lumineszenzlichtquelle, der selektive thermische Strahler oder der schwarze Strahler verfügen in der Regel vorteilhafterweise über ein Emissionsspektrum, welches im Infrarotbereich liegt. Insbesondere der Bereich des Infrarotspektrums ist für die Absorption von Fluiden von besonderem Interesse. Daher umfasst die Vorrichtung vorteilhafterweise eine Infrarotlichtquelle.

Vorteilhafterweise ist die Lichtquelle räumlich in die photonische Bandgap-Struktur integriert. Insbesondere für Licht, welches aufgrund der periodischen Brechungsindexvariation in der photonischen Bandgap-Struktur mit einer deutlich erniedrigten Gruppengeschwindigkeit propagiert, ergibt sich aufgrund der erhöhten effektiven Brechungsindexes eine sehr hohe Reflektivität bei Eintritt des Lichts in die photonische Bandgap-Struktur. Daher ist es von Vorteil, die Lichtquelle räumlich in die photonische Bandgap-Struktur zu integrieren, da somit eine effiziente Einkopplung des Lichts in die photonische Bandgap-Struktur möglich ist. Beispielsweise ist es möglich, ein thermisch emittierendes Material in einer Öffnung einer Pore oder andersartig gestalteten Hohlraum in der photonischen Bandgap-Struktur vorzusehen.

Vorteilhaft ist eine Ausführungsform, bei der die Lichtquelle in die photonische Bandgap-Struktur integriert ist und sie von einer optischen Kavität umgeben ist. Die optische Kavität beeinflusst das spontane Emissionsspektrum der Lichtquelle derart, dass sich ein schmales, scharfbandiges Emissionsspektrum ergibt. Durch die Abmessungen und die Formgebungen der Kavität ist es möglich, aus dem ansonsten kontinuierlichen Emissionsspektrum eines Materials bestimmte Bereiche herauszufiltern, in denen aufgrund der Kavität eine erhöhte spontane Emissionsrate vorliegt (selektiver thermischer Emitter).

Eine vorteilhafte Ausführungsform der Erfindung besteht darin, die Lichtquelle in Form einer Schicht auszuführen und sie auf der photonischen Bandgap-Struktur anzubringen. Durch den direkten Kontakt des lichtemittierenden Materials mit der photonischen Bandgap-Struktur wird eine gute Einkopplung des Lichts in die photonische Bandgap-Struktur gewährleistet.

Eine weitere vorteilhafte Ausführungsform der Erfindung besteht darin, zwischen der Lichtquelle und der photonischen Bandgap-Struktur einen Freistrahlraum für die Propagation des Lichts vorzusehen. Dadurch dass die Lichtquelle so von der photonischen Bandgap-Struktur entkoppelt ist, ist es möglich, beide Komponenten getrennt voneinander zu optimieren, auszutauschen, zu reparieren und weiterzuentwickeln.

Eine weitere vorteilhafte Ausführungsform der Erfindung besteht darin, dass ein Lichtwellenleiter in Form einer Faser vorgesehen ist, mit Hilfe dessen eine Lichtleitung des Lichts auf dem Weg von der Lichtquelle zu der photonischen Bandgap-Struktur erreicht werden kann. Lichtwellenleiter in Form von Fasern erlauben eine flexible Leitung des Lichts und so eine räumliche Entkopplung der Lichtquelle von der photonischen Bandgap-Struktur. Weiterhin haben Lichtwellenleiter den Vorteil, dass sie an ihrem Austrittsende eine stark gebündelte Lichtquelle darstellen, welche in ihrer räumlichen Position und Abstrahlrichtung zeitlich sehr stabil ist. Weiterhin sind vorkonfigurierte Bausätze, bestehend aus einer Lichtquelle zusammen mit einer bereits angeschlossenen Faser für die Lichtwellenleitung, kommerziell zu günstigen Preisen erhältlich.

Eine vorteilhafte Ausführungsform der Erfindung besteht weiterhin darin, einen integrierten optischen Wellenleiter für die Lichtleitung des Lichts von der Lichtquelle zu der photonischen Bandgap-Struktur hin vorzusehen. Bei der Herstellung einer photonischen Bandgap-Struktur oder einer Lichtquelle mittels halbleiterspezifischer Prozessschritte ist es von Vorteil, einen optischen Wellenleiter, der das Licht von der Lichtquelle zu der photonischen Bandgap-Struktur hinleitet, gleich mit herzustellen. Dadurch ist eine optimale Positionierung der Lichtquelle, des Wellenleiters und der photonischen Bandgap-Struktur möglich, so dass eine optimale Ausnutzung des von der Lichtquelle zur Verfügung gestellten Lichts durch eine effiziente Wellenleitung sowie Ein- und Auskopplung in den Wellenleiter ermöglicht wird.

Eine vorteilhafte Ausführungsform der Erfindung besteht darin, dass die Brechungsindexperiodizität der photonischen Bandgap-Struktur in einer, zwei oder drei Raumrichtungen vorgesehen ist. Eine Brechungsindexperiodizität in einer Raumrichtung besteht beispielsweise darin, dass sich schichtförmige Bereiche mit verschiedenem Brechungsindex periodisch abwechseln. Das Licht kann hierbei senkrecht zu der Ebene der schichtförmigen Bereiche mit einer aufgrund der Brechungsindexperiodizität verminderten Gruppengeschwindigkeit propagieren. Eine zweidimensionale Brechungsindexperiodizität besteht beispielsweise darin, säulen- oder stabartige Bereiche vorzusehen, die im Vergleich zu dem umgebenden Medium einen verschiedenen Brechungsindex aufweisen. Eine vorteilhafte Ausführungsform hiervon besteht beispielsweise darin, mittels stark gerichtetem Ätzen Poren mit beispielsweise kreisförmigem Querschnitt in Silizium herzustellen. Durch die zweidimensionale Brechungsindexperiodizität der photonischen Bandgap-Struktur ist es möglich, das Licht aus verschiedenen Richtungen auf die Bandgap-Struktur einzustrahlen, so dass das Licht innerhalb der Bandgap-Struktur in verschiedenen Richtungen propagiert. Hierbei ist jedoch immer, solange eine Propagationskomponente senkrecht zur Porenrichtung vorliegt, eine aufgrund der Brechungsindexperiodizität verringerte Gruppengeschwindigkeit gegeben. Eine dreidimensionale Brechungsindexperiodizität besteht darin, dass ein Raumbereich mit einem von dem umgebenden Material verschiedenen Brechungsindex in drei Raumdimensionen periodisch wiederholt vorliegt. Durch eine derartige photonische Bandgap-Struktur kann Licht aufgrund der Brechungsindexperiodizität in jeder beliebigen Raumrichtung innerhalb der photonischen Bandgap-Struktur mit einer niedrigen Gruppengeschwindigkeit propagieren.

Eine besonders vorteilhafte Ausführungsform der Erfindung besteht darin, dass die Geometrie der photonischen Bandgap-Struktur so beschaffen ist, dass die Bandlücke der photonischen Bandgap-Struktur im Wesentlichen gerade ober- oder unterhalb einer spezifischen Frequenz des von der Lichtquelle emittierten Lichts liegt. Wird von der Lichtquelle Licht emittiert, welches eine Frequenz hat, die gerade ober- oder unterhalb der Bandlücke der photonischen Bandgap-Struktur liegt, so ergibt sich gerade in diesen Frequenzbereichen eine Bandstruktur mit einem flachen Bandverlauf und dementsprechend eine niedrige Gruppengeschwindigkeit. Dies ist für eine lange Wechselwirkungszeit zwischen dem Licht und dem Fluid von besonderem Vorteil.

Eine vorteilhafte Ausführungsform der Erfindung besteht darin, dass die Bereiche in der photonischen Bandgap-Struktur, die einen erniedrigten oder einen erhöhten Brechungsindex aufweisen, durch Poren in dem Material realisiert sind. Derartige Poren lassen sich beispielsweise mittels eines Ätzprozesses in einem Material insbesondere einem Halbieitermaterial schnell, präzise und kostengünstig herstellen.

Eine besonders vorteilhafte Ausführungsform der Erfindung besteht darin, dass die Poren die Bereiche mit einem im Vergleich zu dem umgebenden Material niedrigerem Brechungsindex aufweisen, und die Geometrie der photonischen Bandgap-Struktur so beschaffen ist, dass die Bandlücke gerade unterhalb der Frequenz einer spezifischen Lichtfrequenz, die von der Lichtquelle emittiert wird, liegt. Die Geometrie der photonischen Bandgap-Struktur bestimmt sich aus der Periodizitätslänge der Brechungsindexperiodizität als auch aus der Ausdehnung und Verteilung der verschiedenen Brechungsindices innerhalb einer Periodizitätslänge der Brechungsindexperiodizität. Bilden die Poren den Bereich mit dem erniedrigten Brechungsindex und liegt das Licht, welches zur Analyse des Fluids verwendet wird, mit seiner Frequenz gerade oberhalb der Bandlücke der photonischen Bandgap-Struktur, so ergibt sich eine besonders hohe Lichtintensität des Lichts gerade in den Bereichen der Poren. Die Lichtintensität in Bereichen mit einem erhöhten Brechungsindex ist in diesem Falle vergleichsweise niedrig. Dadurch dass die Lichtintensität in den Bereichen der Poren, die den niedrigen Brechungsindex umfassen, besonders hoch ist, ist eine Wechselwirkung mit einem Fluid, welches sich in den Poren befindet, besonders stark. Dadurch lässt sich eine extrem raumsparende Ausführung der Erfindung realisieren.

Eine vorteilhafte Ausführungsform der Erfindung besteht darin, dass die Bereiche mit dem erhöhten und mit dem erniedrigten Brechungsindex die Form von Schichten aufweisen. Eine solche Ausführungsform stellt eine einfache Ausführungsform der Brechungsindexperiodizität dar, welche sich entsprechend vorteilhafterweise einfach herstellen lässt.

Eine vorteilhafte Weiterführung der Erfindung besteht darin, dass die Schichten entlang einer spezifischen Richtung eine periodische Variation ihrer Schichtdicke aufweisen. Dadurch ist es möglich, eine zweidimensionale periodische Brechungsindexperiodizität zu erreichen. Eine mögliche Realisierung dieser Ausführungsform besteht darin, schichtartige Poren in Silizium zu ätzen und während des Ätzprozesses eine zeitlich modulierte Ätzrate zu verwenden. Hierdurch werden Schichten hergestellt, die entlang einer spezifischen Richtung in der Schichtebene eine periodische Variation ihrer Schichtdicke aufweisen.

Eine vorteilhafte Ausführungsform der Erfindung besteht darin, dass die Bereiche mit dem erniedrigten oder auch die Bereiche mit dem erhöhten Brechungsindex die Form von Säulen aufweisen. Vorteilhafterweise haben die Säulen einen kreisförmigen, dreieckigen, viereckigen, quadratischen, rechteckigen, rautenförmigen, polygonförmigen unregelmäßig geformten oder hexagonalen Querschnitt. Durch die Ausbildung der Bereiche mit einem erniedrigten oder einem erhöhten Brechungsindex in Form von Säulen, wird eine zweidimensionale Brechungsindexperiodizität erreicht. Solche Strukturen sind mit Ätzverfahren aus der Halbleitertechnologie einfach herzustellen.

Die Stirnseiten der Säulen bilden hierbei ein flächendeckendes periodisches Muster, so dass sich durch die periodische Anordnung der Säulen die benötigte Brechungsindexvariation ergibt. Das flächendeckende Muster ist hierbei vorteilhafterweise mit einer hexagonalen, rhomboedrischen, rautenförmigen, quadratischen oder rechteckigen Einheitszelle vorgesehen. Durch die Auswahl der Einheitszelle des periodischen flächendeckendes Musters der Stirnflächen der Säulen kann eine Isotropie oder Anisotropie der Propagation des Lichts in der Ebene der Stirnflächen, d.h. senkrecht zu den säulenförmigen Bereichen, erreicht werden. Somit ist es möglich, die optischen Eigenschaften der photonischen Bandgap-Struktur gezielt den spezifischen Anforderungen für eine Vorrichtung zur Analyse von Fluiden anzupassen. Durch verschiedene Propagationseigenschaften in verschiedenen Raumrichtungen innerhalb der photonischen Bandgap-Struktur ist beispielsweise eine Lichtführung innerhalb der periodischen Bandgap-Struktur oder eine Aufspaltung des Lichts nach chromatischen Anteilen möglich.

Weisen die Säulen entlang ihrer längsten Ausdehnung eine Periodizität der Querschnittsfläche zu der längsten Ausbreitungsrichtung auf, so ergibt sich eine weitere vorteilhafte Ausführungsform der Erfindung. Durch die Periodizität der Querschnittsfläche ergibt sich eine dreidimensionale Realisierung einer Periodizität des Brechungsindex. Sind beispielsweise die Bereiche mit einem erhöhten oder einem erniedrigten Brechungsindex im Vergleich zu dem restlichen Material offene Bereiche, in die das Fluid eintreten kann, so ist es möglich, dass das Fluid parallel zu der Ausbreitungsrichtung des Lichts in der photonischen Bandgap-Struktur die photonische Bandgap-Struktur durchsetzt. Streuverluste, die bei der Durchstrahlung von Grenzflächen der Bereiche mit dem erniedrigten und dem erhöhten Brechungsindex auftreten, lassen sich so weitgehend vermeiden.

Eine besonders vorteilhafte Ausführungsform der Erfindung besteht darin, dass zumindest ein Teil der Bereiche, die einen erhöhten oder einen erniedrigten Brechungsindex aufweisen, offene Freiräume umfassen, von denen zumindest ein Teil das zu analysierende Fluid enthalten. Dadurch dass die photonische Bandgap-Struktur offene Freiräume für das zu analysierende Fluid zur Verfügung stellt, ist eine besonders gute Wechselwirkung des aufgrund der Brechungsindexperiodizität der photonischen Bandgap-Struktur verlangsamten Lichts mit dem zu analysierenden Fluid möglich. Dies wirkt sich vorteilhaft auf eine mögliche Reduktion des räumlichen Ausdehnungsbereichs der photonischen Bandgap-Struktur aus.

Eine weitere vorteilhafte Ausführungsform der Erfindung besteht darin, dass die Freiräume zumindest auf einer Seite der photonischen Bandgap-Struktur offen sind. Durch diese Öffnung ist es möglich, das Fluid, das sich in den Freiräumen befindet, auszutauschen bzw. laufend zu erneuern.

Eine weitere vorteilhafte Ausführungsform der Erfindung besteht darin, dass die Freiräume zumindest auf zwei Seiten der photonischen Bandgap-Struktur offen sind. Diese Öffnung auf zwei Seiten der Freiräume ermöglicht ein Durchströmen der Freiräume mit dem zu analysierenden Fluid. Dadurch sind kurzfristige Änderungen der Zusammensetzung des Fluids schnell detektierbar.

Eine besonders vorteilhafte Ausführung der Erfindung besteht darin, dass die photonische Bandgap-Struktur zumindest auf einer Seite der photonischen Bandgap-Struktur ein gradiertes Brechungsindexprofil aufweist. Durch die erniedrigte Gruppengeschwindigkeit, insbesondere im Bereich für Frequenzen in der Nähe der Bandlücke, weist die photonische Bandgap-Struktur für Licht mit Frequenzen in der Nähe der Bandlücke einen besonders hohen effektiven Brechungsindex auf. Dies führt zu einer stark erhöhten Reflektivität des Materials für Licht mit einer spezifischen Wellenlänge. Es stellt somit ein Problem dar, das Licht in die photonische Bandgap-Struktur einzukoppeln. Ein gradiertes Brechungsindexprofil auf einer Seite der photonischen Bandgap-Struktur entspricht effektiv einer Entspiegelung dieser Seite. Durch ein gradiertes Brechungsindexprofil wird ein kontinuierlicher Anstieg des effektiven Brechungsindexes erreicht und somit die Einkopplung des Lichts in die photonische Bandgap-Struktur deutlich verbessert. Das gradierte Brechungsindexprofil kann durch die Veränderung der Periodizitätslänge realisiert werden als auch durch die Variation der geometrischen Abmessungen der Bereiche mit einem erhöhten und einem erniedrigten Brechungsindex innerhalb einer Periodizitätslänge.

Eine vorteilhafte Ausführungsform der Erfindung besteht darin, dass die photonische Bandgap-Struktur einen Referenzbereich umfasst, in dem sich ein Referenzfluid befindet, dessen Eigenschaften und Zusammensetzung als Referenz für die Messung des zu analysierenden Fluids herangezogen werden können. Dadurch dass ein Referenzbereich mit einem Referenzfluid vorgesehen ist, lässt sich eine deutliche Steigerung der Präzision der Analysegenauigkeit der Vorrichtung erreichen. Vorteilhafterweise ist in dem Referenzbereich das Referenzfluid hermetisch eingeschlossen. Die somit einmal eingestellte Referenz der Vorrichtung bedarf keiner weiteren Wartungs- oder Emeuerungsprozeduren, sondern lässt sich bereits vor der Herstellung der Vorrichtung dauerhaft gewährleisten.

Vorteilhafterweise hat die photonische Bandgap-Struktur die Form eines Prismas. Durch den hohen effektiven Brechungsindex der photonischen Bandgap-Struktur ergibt sich eine extrem starke chromatische Aufspaltung des Lichts dadurch dass die photonische Bandgap-Struktur die Form eines Prismas aufweist. Durch die chromatische Aufspaltung des Lichts ist es möglich, einen breiten spektralen Bereich bezüglich der Absorption des Lichts durch das Fluid zu untersuchen. Dies erlaubt die Detektion mehrere Fluidkomponenten gleichzeitig.

Weiterhin ist es möglich, durch die Geometrie der Periodizität der photonischen Bandgap-Struktur ein Brechungsindexprofil derart zu gestalten, dass sich gegeben durch den Brechungsindex effektiv ein Prisma darstellt, auch wenn die äußere Form der photonischen Bandgap-Struktur nicht die Form eines Prismas aufweist. Dies ist z.B. dadurch gegeben, dass der effektive Brechungsindex in einem Raumbereich der photonischen Bandgap-Struktur einen höheren Wert hat als in einem anderen Raumbereich der photonischen Bandgap-Struktur, und dass der Bereich, der einen erhöhten Brechungsindex aufweist, die Form eines Prismas hat.

Eine besonders vorteilhafte Ausführungsform der Erfindung besteht darin, dass innerhalb der Vorrichtung beispielsweise innerhalb der photonischen Bandgap-Struktur ein Katalysator vorgesehen ist, der zumindest auf eine Komponente des zu analysierenden Fluids eine katalytische Wirkung hat. Der Katalysator sollte dabei so vorgesehen sein, dass das Fluid Kontakt zu dem Katalysator hat. Mittels des Katalysators ist es möglich, eine chemische Reaktion eines Bestandteils des Fluids zu katalysieren bzw. überhaupt erst zu ermöglichen. Dadurch ist es möglich, Produkte innerhalb der photonischen Bandgap-Struktur herzustellen, die sich besonders gut mittels Absorptionsspektroskopie nachweisen lassen. Weiterhin ist es möglich, vor bzw. hinter dem Katalysator das Fluid spektroskopisch zu vermessen und somit den Ablauf der Reaktion zu verfolgen. Auch ist es möglich, eine der beiden Messungen als Referenz für die andere Messung heranzuziehen. Eine vergleichende Messung der Zusammensetzung des Fluids vor und nach der katalytischen Reaktion erlaubt eine Erhöhung der Präzision mit der bestimmte Fluidkomponenten nachgewiesen werden können.

Vorteilhafterweise ist der Katalysator ganz oder zumindest teilweise auf der Innenseite der Freiräume vorgesehen, die das zu analysierende Fluid umfassen. Dadurch wird ein besonders guter Kontakt des Fluids mit dem Katalysator gewährleistet. Weiterhin ist es von Vorteil, eine Heizeinrichtung vorzusehen, mit der der Katalysator selektiv beheizt werden kann. Dadurch lässt sich eine Erhöhung der Reaktionsgeschwindigkeit erreichen.

Vorteilhafterweise umfasst die photonische Bandgap-Struktur im Wesentlichen ein Material, das zumindest für eine Wellenlänge des Lichts, das von der Lichtquelle emittiert wird, im Wesentlichen transparent ist. Eine Transparenz des Materials, welches die photonische Bandgap-Struktur im Wesentlichen umfasst, bzw. aus dem die photonische Bandgap-Struktur hergestellt ist, ist insofern von Bedeutung als dass sich aufgrund der erniedrigten Ausbreitungsgeschwindigkeit des Lichts eine hohe Absorption des Lichts auch bei nur einem kleinen Absorptionskoeffizienten des Materials ergibt. Durch die lange Verweilzeit des Lichts in der photonischen Bandgap-Struktur muss für Erreichung eines starken Lichtsignals das Material, das von dem Licht durchsetzt wird, im Wesentlichen für das Licht transparent sein.

Vorteilhafterweise umfasst die photonische Bandgap-Struktur im Wesentlichen Silizium, welches vorzugsweise monokristallin ist. Für Silizium sind zahlreiche halbleitertechnische Verfahrensschritte entwickelt und optimiert, so dass sich eine optimale Integration in bestehende halbleitertechnische Fertigungsprozesse gewährleisten lässt. Weiterhin stellt Silizium ein Material dar, welches auch in sehr hohen Produktqualitäten zu günstigen Preisen erhältlich ist, und welches im infraroten Spektralbereich eine ausreichende Transparenz für Infrarotlicht aufweist.

Eine weitere vorteilhafte Ausführungsform der Erfindung besteht darin, eine Modulationseinrichtung zur zeitlichen Modulation der Lichtintensität des von der Lichtquelle emittierten Lichts zu verwenden. Eine solche Modulation der Lichtintensität erlaubt eine erleichterte Detektion des Lichts nach Wechselwirkung mit dem Fluid. Mittels Lock-in Technik oder eines Signalfilters können störende Signale herausgefiltert werden, sofern die Eingangslichtintensität zeitlich moduliert ist.

Die Modulation der Lichtintensität kann auch dadurch gegeben sein, dass eine Strommodulationseinrichtung zur zeitlichen Modulation des Stroms, mit dem Lichtquelle versorgt wird, vorgesehen ist. Durch die direkte Modulation des Stroms, mit dem die Lichtquelle versorgt wird, wird sich auch eine zeitliche Modulation der emittierenden Lichtintensität ergeben mit den oben benannten Vorteilen.

Eine weitere Ausführungsform der Erfindung besteht darin, den Druck des zu analysierenden Fluids mit Hilfe einer Fluiddruckmodulationseinrichtung zu modulieren. Eine weitere Möglichkeit besteht darin, die Temperatur der photonischen Bandgap-Struktur mittels einer Temperaturmodulationseinrichtung zu modulieren. Sowohl die Druck- als auch die Temperaturmodulation führen zu einer Modulation der Ausdehnung der photonischen Bandgap-Struktur. Dadurch ergibt sich aufgrund der veränderten Dispersionsrelation eine Änderung der Wechselwirkungslänge und/oder Wechselwirkungsdauer des Lichts mit dem Fluid, wodurch sich eine Modulation der Ausgangsintensität ergibt.

Eine vorteilhafte Ausführungsform der Erfindung besteht darin, das Licht, welches mit dem Fluid in Wechselwirkung getreten ist, anschließend mit einem Detektor für Licht zu detektieren. Diese einfachste Ausführungsform bezüglich der Detektion der Wechselwirkung zwischen dem Licht und dem Fluid beruht darauf, einfach die Lichtintensität zu messen, die nach der Wechselwirkung des Lichts mit dem Fluid verblieben ist. Aus der Messung der Intensität wird auf die Absorption des Fluids in einem bestimmten spektralen Wellenlängenbereich geschlossen, woraus auf die Zusammensetzung des Fluids geschlossen wird.

Vorteilhafterweise ist der Detektor als ein diskreter Detektor vorgesehen.

Unter einem diskreten Detektor ist ein einzelnes Element zu verstehen, das für sich genommen als Detektor funktionsfähig ist. Ein solcher diskreter Detektor ist beispielsweise nicht in einem integrierten Verfahren zusammen mit anderen Komponenten der Vorrichtung hergestellt.

Eine weitere vorteilhafte Ausführungsform der Erfindung besteht darin, einen mehrteiligen Lichtdetektor zur Detektion des Lichts an mehreren Stellen in der Vorrichtung vorzusehen. Dies ist besonders hilfreich in Kombination mit einer photonischen Bandgap-Struktur, welche eine chromatische Aufspaltung des Lichts gewährleistet. Mit Hilfe eines mehrteiligen Lichtdetektors ist es möglich, das Licht von verschiedenen Wellenlängenbereichen räumlich getrennt und zeitlich parallel zu detektieren. Damit wird es möglich, verschiedene Komponenten eines Fluids, dessen Zusammensetzung analysiert werden soll, gleichzeitig zu ermitteln.

Da in der Vorrichtung vorzugsweise Infrarotlicht verwendet wird, besteht eine vorteilhafte Ausführungsform der Erfindung darin, als Detektor ein thermoelektrisches Element vorzusehen. Ein thermoelektrisches Element wandelt ein Wärmesignal in ein elektrisches Signal um, welches leicht zur weiteren Verarbeitung weitergegeben werden kann. Vorteilhafterweise ist das thermoelektrische Element in Form von Schichten z.B. auf der photonischen Bandgap-Struktur selber vorgesehen und umfasst vorteilhafterweise Antimon und/oder Bismuth.

Eine besonders vorteilhafte Ausführungsform der Erfindung besteht darin, eine Modulationseinrichtung so vorzusehen, dass die Lichtintensität, die auf die photonische Bandgap-Struktur fällt und von der Lichtquelle ausgesandt ist, mit einer Frequenz moduliert ist, die der akustischen Frequenz einer Resonatormode der photonischen Bandgap-Struktur im Wesentlichen entspricht. Durch Freiräume oder Poren in der photonischen Bandgap-Struktur ergeben sich akustische Resonatoren. Durch die Wechselwirkung des Lichts insbesondere des Infrarotlichts mit dem Fluid ergibt sich ein zeitlich modulierter Druck in der photonischen Bandgap-Struktur (photoakustischer Effekt). Erfolgt die Modulation des Drucks mit einer Frequenz, die einer akustischen Resonatormode der photonischen Bandgap-Struktur im Wesentlichen entspricht, so erfolgt eine resonante Verstärkung der Druckmodulation. Diese akustische Resonanz ist leicht zu detektieren.

Vorteilhafterweise wird die akustische Resonanz mit einem Mikrofon zur Detektion der akustischen Schwingungen in der photonischen Bandgap-Struktur detektiert. Das Mikrofon umfasst vorteilhafterweise ein piezoelektrisches Element, welches beispielsweise direkt auf der photonischen Bandgap-Struktur angebracht sein kann.

Ein Mikrofon, welches ein piezoelektrisches Element umfasst, lässt sich kompakt und kostengünstig herstellen und liefert ein elektrisches Ausgangssignal, welches direkt weiterverarbeitet werden kann.

Eine weitere Ausführungsform zur Detektion der akustischen Resonanz besteht darin, eine Markierung, z.B. einen Spiegel, auf der photonischen Bandgap-Struktur anzubringen und diese Markierung optisch zu detektieren. Dies kann beispielsweise mit einer weiteren Lichtquelle und einem weiteren Lichtdetektor erfolgen.

Eine vorteilhafte Ausführungsform der Erfindung besteht darin, eine Filtereinrichtung zur Filterung des Ausgangssignals des vom Detektor ausgegebenen Signals vorzusehen. Diese Filterung erfolgt vorteilhafterweise so, dass im Wesentlichen Signalkomponenten mit der Frequenz den Filter passieren, die der Frequenz der Modulation der Lichtintensität des Fluiddrucks des zu analysierenden Fluids oder der Temperatur der photonischen Bandgap-Struktur entsprechen. Insbesondere diese Signalkomponenten sind für die quantitative Auswertung der Absorption von besonderem Interesse und sollten von der Filtereinrichtung durchgelassen werden.

Eine vorteilhafte Ausführungsform der Erfindung besteht darin, dass die Lichtquelle oder ein Lichtleiter so vorgesehen ist, dass das Licht im Wesentlichen zur Propagation quer zur Porenachse der photonischen Bandgap-Struktur vorgesehen ist.

Eine weitere Ausführungsform der Erfindung besteht darin, dass das Licht im Wesentlichen zur Propagation parallel zur Porenachse in der photonischen Bandgap-Struktur vorgesehen ist. Durch eine solche Ausführungsform ist es möglich, Streuverluste an Grenzflächen, die bei Ein- oder Austritt des Lichts in oder aus der photonischen Struktur auftreten, zu vermeiden. Die Vermeidung von Streulicht ist insofern vorteilhaft, als damit eine signifikante Reduktion eigentlichen Messsignals vermieden wird und weiterhin die Entstehung von Streulicht, welche das eigentliche Signallicht überdeckt, vorteilhafterweise vermieden wird.

Eine besonders vorteilhafte Ausführungsform der Erfindung besteht darin, eine schlauchartige Einleiteinrichtung zur Einleitung des zu analysierenden Fluids in Richtung der photonischen Bandgap-Struktur vorzusehen. Mit Hilfe einer schlauchartigen Einleiteinrichtung ist es möglich, das zu analysierende Fluid direkt und gut gebündelt der photonischen Bandgap-Struktur zuzuleiten.

Eine Fluteinrichtung zum Fluten der photonischen Bandgap-Struktur mit dem zu analysierenden Fluid bildet eine weitere vorteilhafte Ausführungsform der Erfindung. Wird die photonische Bandgap-Struktur mit dem zu analysierenden Fluid geflutet, so werden alle Poren und Freiräume der photonischen Bandgap-Struktur mit dem zu analysierenden Fluid durchsetzt oder gefüllt, und somit ergibt sich eine gute Messqualität, und weiterhin kann durch das ständige Fluten der photonischen Bandgap-Struktur mit dem zu analysierenden Fluid eine Echtzeitmessung der Fluidkompension erfolgen.

Eine weitere vorteilhafte Ausführungsform der Erfindung besteht darin, die photonische Bandgap-Struktur oder auch den gesamten Sensor in eine mikromechanische Flusszelle zu integrieren. Die mikromechanische Flusszelle verfügt über Einrichtungen das zu analysierende Fluid der photonischen Bandgap-Struktur zuzuführen sowie evtl. auch den Fluidfluss zu steuern bzw. zu regeln.

Das erfindungsgemäße Verfahren zur Analyse der qualitativen und/oder quantitativen Zusammensetzuhg von Fluiden ist neben der Verwendung einer Lichtquelle und einer Detektionseinrichtung zur Detektion der Wechselwirkung des von der Lichtquelle ausgesandten Lichts mit dem Fluid dadurch gekennzeichnet, dass zumindest ein Teil des Lichts der Lichtquelle aufgrund der Brechungsindexperiodizität einer photonischen Bandgap-Struktur mit einer im Vergleich zum Vakuum verminderten Gruppengeschwindigkeit propagiert, und zumindest ein Teil des Lichts, das aufgrund der Brechungsindexperiodizität der photonischen Bandgap-Struktur mit einer erniedrigten Gruppengeschwindigkeit propagiert, mit einem zu analysierenden Fluid wechselwirkt.

Aufgrund der erniedrigten Propagationsgeschwindigkeit des Lichts in der photonischen Bandgap-Struktur aufgrund der Brechungsindexperiodizität ergibt sich bei dem erfindungsgemäßen Verfahren eine erhöhte Wechselwirkungszeit des Lichts mit dem zu analysierenden Fluid. Durch die verlängerte Wechselwirkungszeit ergibt sich die Möglichkeit, den Raumbedarf bezüglich der Wechselwirkung des Lichts mit dem Fluid deutlich zu verringern. Das Verfahren kann somit vorteilhafterweise in einem sehr kleinen Raumbereich durchgeführt werden.

Vorteilhafterweise wird die photonische Bandgap-Struktur bei dem erfindungsgemäßen Verfahren mit dem zu analysierenden Fluid beaufschlagt. Durch die Beaufschlagung der Bandgap-Struktur mit dem zu analysierenden Fluid wird eine gute Füllung und ein guter Durchsatz durch die Öffnungen oder Poren oder Freiräume der Bandgap-Struktur mit dem Fluid gewährleistet.

In einer vorteilhaften Ausführungsform des erfindungsgemäßen Verfahrens werden Freiräume in der photonischen Bandgap-Struktur von einer Seite her mit dem analysierenden Fluid gefüllt. Eine weitere erfindungsgemäße Ausführungsform der Erfindung besteht darin, das zu analysierende Fluid durch die photonische Bandgap-Struktur hindurchzuleiten. Dadurch wird eine regelmäßige Erneuerung des Fluids in der photonischen Bandgap-Struktur gewährleistet, so dass eine Anpassung der Fluidkomposition in der photonischen Bandgap-Struktur an das Fluid, das sich außerhalb der photonischen Bandgap-Struktur befindet, erfolgt.

Eine weitere vorteilhafte Ausführungsform des Verfahrens besteht darin, das Licht, welches von der Lichtquelle ausgesandt wird, die Temperatur der photonischen Bandgap-Struktur, den Strom, mit dem die Lichtquelle versorgt wird oder den Druck des zu analysierenden.Fluids zeitlich zu modulieren. Jedes dieser Verfahren bewirkt eine Modulation des Ausgangssignals, welches sich damit mit einem sehr guten Signal zu Rausch-Verhältnis detektieren lässt.

Vorteilhafterweise wird das Verfahren so durchgeführt, dass mindestens eine Komponente des zu analysierenden Fluids an einer chemischen Reaktion teilnimmt, die innerhalb der photonischen Bandgap-Struktur katalysiert wird. Durch die Kombination einer katalytischen Reaktion mit der Detektion einer spezifischen Fluidkomponente ist es möglich, Sensoren für ganz spezifische Fluidkomponenten zu entwickeln, deren direkte unkatalysierte Detektion aufgrund einer geringen optischen Absorption nur schwer möglich wäre.

Vorteilhafterweise wird das Verfahren so durchgeführt, dass der Katalysator beheizt wird. Dadurch lässt sich vorteilhafterweise eine erhöhte Reaktionsgeschwindigkeit der katalytischen Reaktion erreichen.

Vorteilhafterweise wird das Verfahren so durchgeführt, dass eine Referenzanalyse eines bekannten Referenzfluids durchgeführt wird, wobei die Referenzanalyse auf denselben physikalischen Prinzipien beruht wie die Analyse des zu analysierenden Fluids selber. Durch die Durchführung einer Referenzanalyse ist es möglich, die Funktion des Verfahrens an sich sicherzustellen und weiterhin aufgrund der Vergleichsmöglichkeit eine erhöhte Präzision bei der Analyse der Zusammensetzung des Fluids zu erreichen.

Vorteilhafterweise wird das Verfahren so ausgeführt, dass das Ausgangssignal des Detektors gefiltert wird und im Wesentlichen nur diejenigen Signalkomponenten nicht weggefiltert werden, die einer spezifischen Modulationsfrequenz entsprechen. Diese Modulationsfrequenz kann z.B. durch die Modulation der Lichtintensität, der Temperatur der photonischen Bandgap-Struktur, des Drucks des zu analysierenden Fluids oder des Stroms, mit dem die Lichtquelle versorgt wird, vorgegeben sein. Diejenigen Signalkomponenten, die im Bereich der Wechselwirkung des Fluids mit dem Licht eine Modulation aufweisen, stellen ein Maß für die Wechselwirkung des Lichts mit dem Fluid also insbesondere für dessen Absorption dar. Daher sollten diese Signalkomponenten vorteilhafterweise bei Durchführung des erfindungsgemäßen Verfahrens nicht weggefiltert werden.

Eine vorteilhafte Ausführungsform des Verfahrens besteht weiterhin darin, das Licht, das auf die photonische Bandgap-Struktur fällt, dispersiv aufzuspalten und das so chromatisch aufgespaltete Licht spektral aufgelöst zu detektieren. Durch die chromatische Aufspaltung und spektral aufgelöste Detektion ist es möglich, verschiedene Komponenten des zu analysierenden Fluids gleichzeitig qualitativ und/oder quantitativ zu bestimmen.

Eine besonders vorteilhafte Ausführungsform des erfindungsgemäßen Verfahrens besteht darin, dass in der photonischen Bandgap-Struktur im Wesentlichen nur Licht propagiert, das einer Absorptionslinie oder Absorptionsbande derjenigen Fluidkomponente entspricht, die in bevorzugter Weise qualitativ und/oder quantitativ analysiert wird. Dadurch dass die Frequenz oder Wellenlänge desjenigen Lichts, welches in der Bandgap-Struktur propagiert entsprechend einer Absorptionsbande oder Absorptionslinie einer zu detektierenden Fluidkomponente ausgewählt wird, ergibt sich eine besonders hohe Absorption des Lichts im Bereich der photonischen Bandgap-Struktur durch das Fluid. Damit lässt sich ein erhöhtes Signal-Rausch-Verhältnis gewährleisten.

Im Folgenden werden Ausgestaltung der erfinderischen Vorrichtung und des erfinderischen Verfahrens mit Hilfe der anliegenden Figuren erläutert. Dabei zeigt
- Fig. 1: Beispiel für eine photonische Bandgap-Struktur; (hexagonaler 2D photonischer Kristall)
- Fig. 2: schematische Darstellung einer Ausführungsform der erfindungsgemäßen Vorrichtung;
- Fig. 3: verschiedene photonische Bandgap-Strukturen, die in der erfindungsgemäßen Vorrichtung verwendet werden können;
- Fig. 4: die Möglichkeiten, die Struktur einer photonischen Bandgap-Struktur zu wählen, wie sie in der erfindungsgemäßen Vorrichtung verwendet wird.
- Fig. 5: eine photonische Bandgap-Struktur, wie sie in der erfindungsgemäßen Vorrichtung verwendet wird, bei der prismatische Effekte auftreten;
- Fig. 6: verschiedene Möglichkeiten, das Licht von der Lichtquelle zu der photonischen Bandgap-Struktur zu leiten;
- Fig. 7: verschiedene Anordnungen der Lichtquelle der photonischen Bandgap-Struktur und des Detektors relativ zueinander;
- Fig. 8: eine in die photonische Bandgap-Struktur integrierte Lichtquelle;
- Fig. 9: photonische Bandgap-Strukturen mit einer gradierten Seite;
- Fig. 10: eine Ausführungsform der erfindungsgemäßen Vorrichtung, bei der Licht chromatisch aufgespaltet wird, und Licht mit verschiedenen Wellenlängen detektiert wird;
- Fig. 11: eine einseitig geöffnete und eine zweiseitig geöffnete photonische Bandgap-Struktur, wie sie in der erfindungsgemäßen Vorrichtung verwendet wird;
- Fig. 12: eine photonische Bandgap-Struktur, wie sie in der erfindungsgemäßen Vorrichtung verwendet wird, mit einem Katalysator;
- Fig. 13: schematische Darstellung der erfindungsgemäßen Vorrichtung unter Verwendung eines Katalysators und einer Referenzmessung;
- Fig. 14: erfindungsgemäße Vorrichtung mit den Einrichtungen zur Durchführung einer Referenzmessung;
- Fig. 15: Möglichkeiten zur Modulation des Signals;
- Fig. 16: Möglichkeiten zur Detektion der Wechselwirkung zwischen dem Fluid und dem Licht durch Anregung akustischer Schwingungen in der photonischen Bandgap-Struktur;
- Fig. 17: Detektion des -Lichts mittels eines thermoelektrischen Elements;

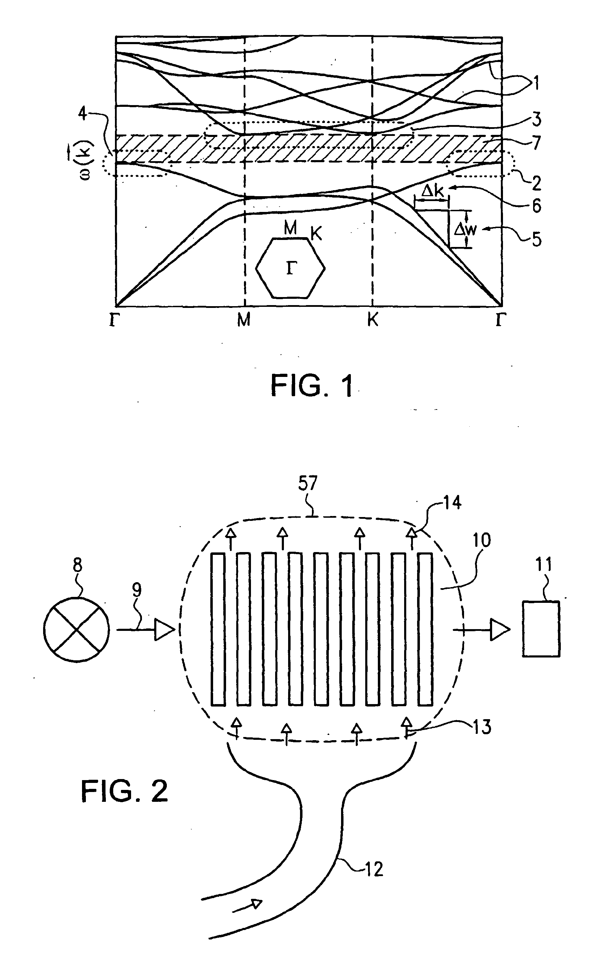

Fig. 1 zeigt ein Beispiel einer photonischen Bandgap-Struktur mit den photonischen Bändern 1. Die Bereiche 2, 3 und 4 kennzeichnen die Bereiche, in denen ein flacher Bandverlauf vorliegt. Die Gruppengeschwindigkeit ist v_{gr}, die sich aus dem Quotienten Δω /Δk (5/6) ergibt. In den Bereichen 2, 3 und 4 ist die Gruppengeschwindigkeit sehr klein. Der schraffierte Bereich 7 kennzeichnet die photonische Bandlücke für Frequenzen ω(k). Für Frequenzen die in dem Bereich der photonischen Bandlücke liegen, ist eine Propagation des Lichts nicht möglich.

Fig. 2 zeigt die erfindungsgemäße Vorrichtung mit der Lichtquelle 8, die in Richtung 9 Licht in Richtung der photonischen Bandgap-Struktur 10 aussendet. Über eine Einlass- oder Fluteinrichtung 12 wird Fluid 13 in die photonische Bandgap-Struktur 10 eintreten. Das austretende Fluid 14 verlässt die photonische Bandgap-Struktur 10. Ein Detektor 11 misst die Lichtintensität des Lichts, das durch die photonische Bandgap-Struktur 10 hindurchgetreten ist. Die Bezugsziffer 57 kennzeichnet das Wechselwirkungsraumgebiet.

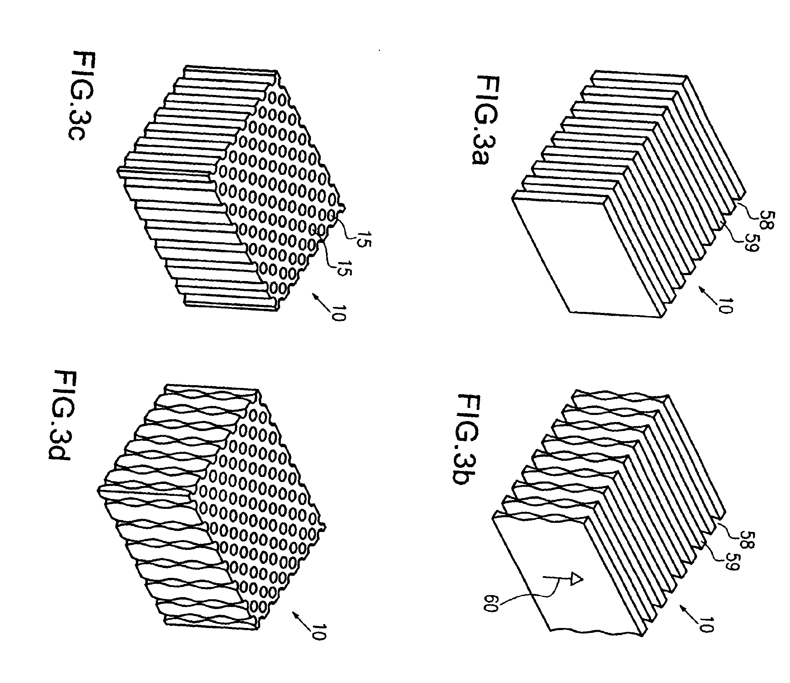

Fig. 3A zeigt eine eindimensionale photonische Bandgap-Struktur, wie sie in der erfindungsgemäßen Vorrichtung verwendet wird. Die Bereiche mit dem erhöhten 59 und erniedrigtem 58 Brechungsindex haben die Form von Schichten. Fig. 3B zeigt eine photonische Bandgap-Struktur, wie sie in der erfindungsgemäßen Vorrichtung verwendet wird, bei der die Bereiche mit erniedrigtem 58 und mit erhöhtem 59 Brechungsindex die Form von Schichten haben, jedoch die Schichtdicke in einer Richtung 60 eine periodisch verändernde Schichtdicke aufweisen. Dies stellt eine zweidimensionale photonische Bandgap-Struktur dar. Fig. 3C zeigt eine weitere Ausführungsform einer zweidimensionalen photonischen Bandgap-Struktur, wie sie alternativ in der erfindungsgemäßen Vorrichtung verwendet wird. Hier haben die Bereiche mit erhöhtem oder erniedrigtem Brechungsindex die Form von Säulen. Fig. 3D zeigt ein Beispiel für eine dreidimensionale photonische Bandgap-Struktur, wie sie in der erfindungsgemäßen Vorrichtung verwendet werden können. Die Säulen haben hier einen entlang ihrer Achse periodisch variierende Querschnittsfläche.

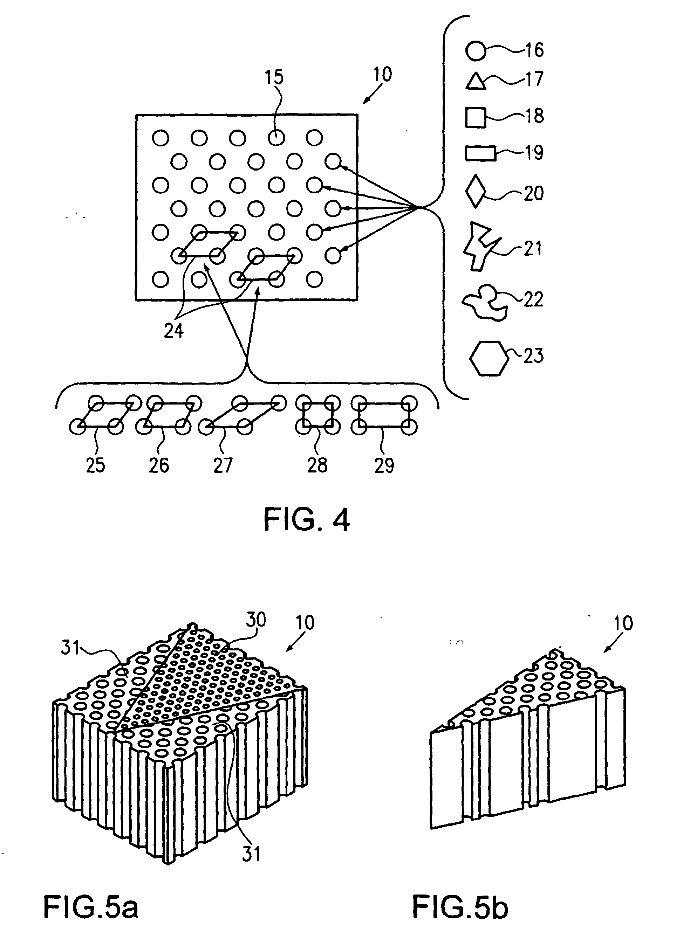

In Fig. 4 bezieht sich die Bezugsziffer 15 auf einen Bereich, der im Vergleich zu dem umgebenden Material einen erhöhten oder einen erniedrigten Brechungsindex hat. Der Bereich 15 hat die Form eines Kreises 16, Dreiecks 17, Quadrats 18, Rechtecks 19, einer Raute 20, eines Polygons 21, eines unregelmäßig geformten Bereichs 22 oder eines Hexagons 23 als Querschnittsfläche. Die Bereiche 15 sind gemäß einer Einheitszelle 24 angeordnet. Die Einheitszelle 24 kann die Form einer hexagonalen 25, rhomboedrischen 26, rautenförmigen 27, quadratischen 28 oder rechteckigen 29 Einheitszelle haben. Eine beliebige Kombination der Einheitszellen 25 bis 29 mit den Bereichen 15, die eine Querschnittsfläche gemäß 16 bis 23 haben, wird in der erfindungsgemäßen Vorrichtung verwendet.

In Fig. 5 sind Beispiele aufgezeigt, bei denen die photonische Bandgap-Struktur die Funktion eines Prismas erfüllt. In Fig. 5A sind zwei verschiedene Bereiche 30 und 31 gezeigt, in denen die photonische Bandgap-Struktur eine verschiedene Geometrie aufweist. Dadurch ergeben sich verschiedene effektive Brechungsindices für das verwendete Licht und durch die Form des Bereichs 30 bzw. der Bereiche 31 ergibt sich die Funktion eines Prismas, welche darin besteht, das Licht chromatisch aufzuspalten. In Fig. 5B ist eine weitere Ausführungsform einer photonischen Bandgap-Struktur 10 dadurch ausgezeichnet, dass sie die Form eines Prismas hat.

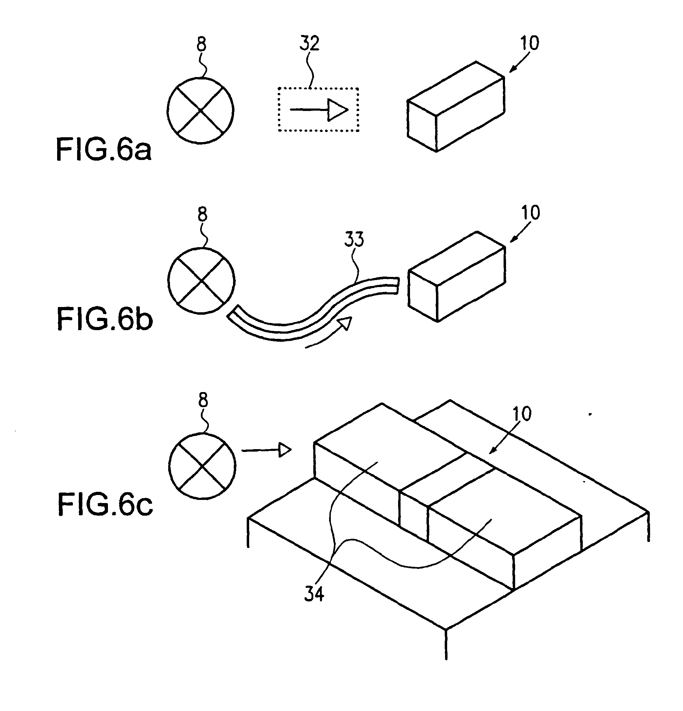

Fig. 6 zeigt die Möglichkeiten, wie das Licht einer Lichtquelle 8 zu einer photonischen Bandgap-Struktur 10 innerhalb der erfindungsgemäßen Vorrichtung geleitet wird. In Fig. 6A ist die Möglichkeit gezeigt, mittels eines Freistrahlraumbereiches 32 das Licht der Lichtquelle 8 der photonischen Bandgap-Struktur 10 zuzuführen. In Fig. 6B ist eine Faser 33 gezeigt, die das Licht der Lichtquelle 8 der photonischen Bandgap-Struktur 10 zuführt. In Fig. 6C ist ein integrierter optischer Wellenleiter gezeigt, 34 der das Licht der Lichtquelle 8 der photonischen Bandgap-Struktur 10 zuführt. Mindestens eine dieser Ausführungsformen der Fig. 6A, 6B und 6C wird in der erfindungsgemäßen Vorrichtung verwendet.

Der Chip mit dem Wellenleiter und der PBG-Struktur nach Fig. 6c könnte beispielsweise an den beiden Enden des Wellenleiters mit Fasersteckem konfektioniert werden.

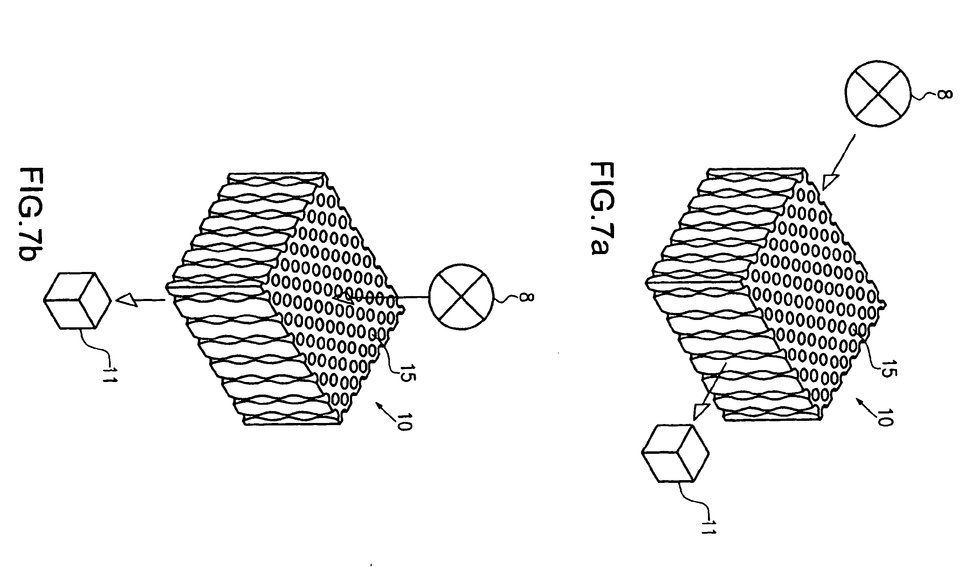

Fig. 7 zeigt die verschiedenen Möglichkeiten, die Lichtquelle 8 und den Detektor 11 relativ zu einer ausgezeichneten geometrischen Richtung der photonischen Bandgap-Struktur 10 anzuordnen. In Fig. 7A propagiert das Licht der Lichtquelle 8 in einer Richtung senkrecht zu der Porenachse der Poren, die in der photonischen Bandgap-Struktur 10 die Bereiche mit erhöhtem oder erniedrigtem Brechungsindex 15 darstellen. In Fig. 7 propagiert das Licht der Lichtquelle 8 in einer Richtung parallel zu der längsten Ausdehnung der Bereiche mit einem erniedrigten oder einem erhöhtem Brechungsindex 15 in der photonischen Bandgap-Struktur 10 auf dem Weg von der Lichtquelle 8 zu dem Detektor 11.

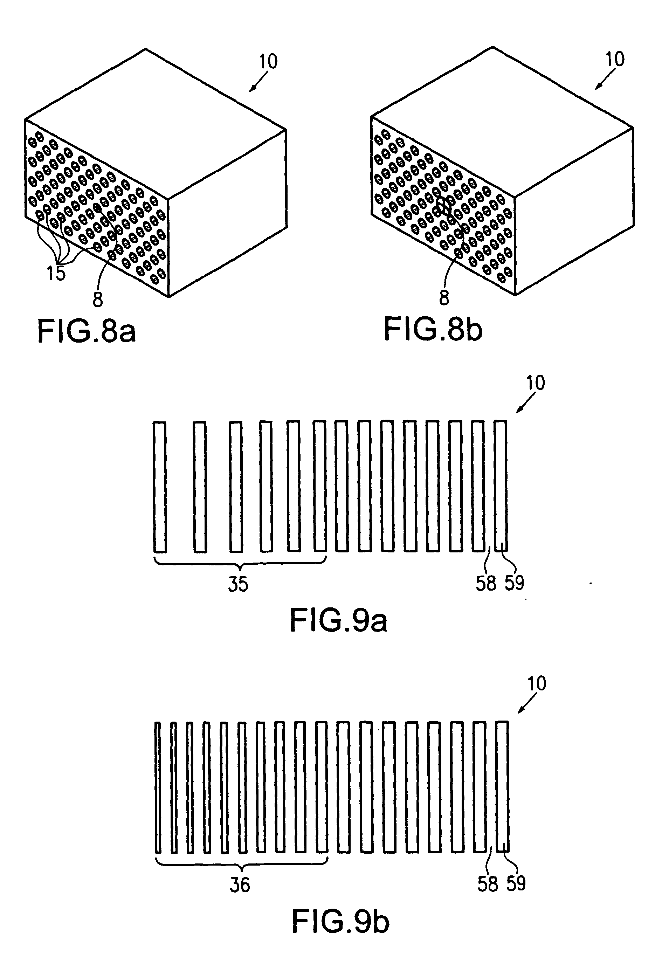

Eine weitere Ausführungsform der erfindungsgemäßen Vorrichtung enthält eine photonische Bandgap-Struktur und eine Lichtquelle, wie sie in Fig. 8 angegeben ist. In Fig. 8A ist in einem der Bereiche 15, die einen erniedrigten oder einen erhöhten Brechungsindex im Vergleich zu dem umgebenden Material aufweisen, die Lichtquelle 8 integriert. Da, wie oben erwähnt, Licht mit Frequenzen, welche einen Bereich mit einem flachen Bandverlauf in der photonischen Bandstruktur entsprechen, nur schwierig bzw. mit einem hohem Reflexionskoeffizienten in die photonische Bandgap-Struktur eindringt, ist es vorteilhaft, das Licht direkt in der photonischen Bandgap-Struktur zu erzeugen. Eine weitere Ausführungsform der photonischen Bandgap-Struktur und der Lichtquelle, wie sie in der erfindungsgemäßen Vorrichtung verwendet werden können, zeigt die Fig. 8B, bei der ein von den Bereichen 15 verschiedener Bereich die Lichtquelle 8 enthält.

Fig. 9 zeigt die Möglichkeiten, auf zumindest einer Seite der photonischen Bandgap-Struktur 10 ein gradiertes Brechungsindexprofil 35, 36 zu erzeugen. In Fig. 9A ist die Möglichkeit gezeigt, die Periodizität der photonischen Bandgap-Struktur an einer Seite zu ändern, um somit den effektiven Brechungsindex kontinuierlich zu variieren. In dem Bereich 35 ist die Möglichkeit gezeigt, die Periodizitätslänge zu vergrößern, jedoch wäre es alternativ ebenso möglich, die Periodizitätslänge zu verkleinern. In Fig. 9B ist die Möglichkeit gezeigt, die Periodizitätslänge in dem Bereich 36 konstant zu lassen, jedoch die Struktur innerhalb einer Periodizitätslänge zu variieren. Die Bereiche mit einem erniedrigten Brechungsindex 58 werden in dem Bereich 36 von rechts nach links zunehmend größer, und somit ändert sich der effektive Brechungsindex in dem Bereich 36 kontinuierlich. Alternativ wäre es ebenso möglich, die Bereiche 59 mit einem erhöhten Brechungsindex kontinuierlich von rechts nach links zu vergrößern, und so ebenfalls ein gradiertes Brechungsindexprofil in dem Bereich 36 zu erzeugen.

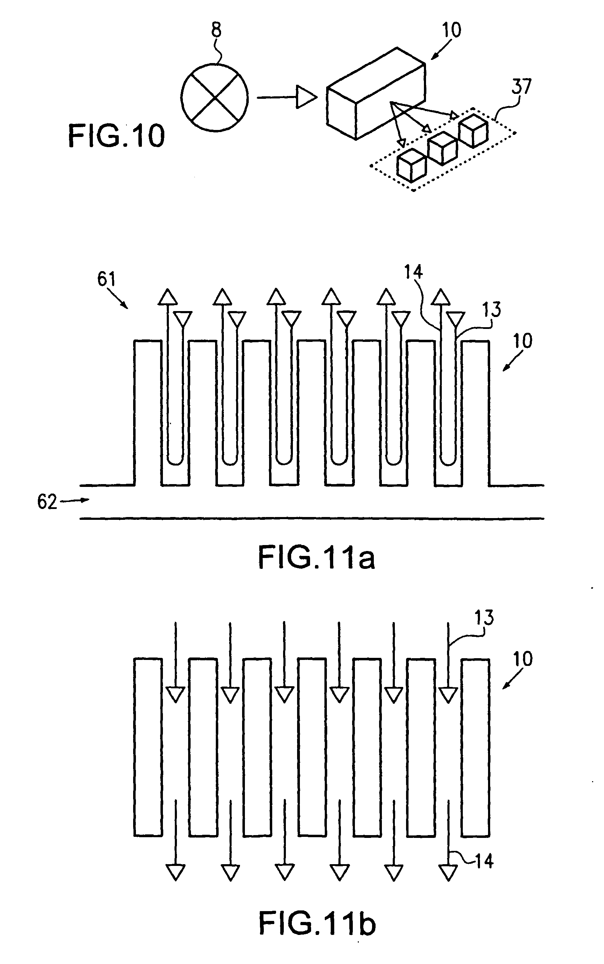

Fig. 10 zeigt die erfindungsgemäße Vorrichtung, bei der das Licht einer Lichtquelle 8 in der photonischen Bandgap-Struktur 10 chromatisch aufgespaltet wird. Diese Aufspaltung kann beispielsweise durch das Prisma (Fig. 5a) erreicht werden. Die Detektorengruppe 37 detektiert das Licht mit verschiedenen Wellenlängen. Es ist somit möglich, gleichzeitig das Licht mit verschiedenen Wellenlängen zu detektieren.

Fig. 11A zeigt eine photonische Bandgap-Struktur 10, die an einer Seite 61 geöffnet ist und an der anderen Seite 62 geschlossen ist. Das eintretende Fluid 13 tritt auf der Seite 61 in die photonische Bandgap-Struktur ein. Auf derselben Seite 61 verlässt das austretende Fluid 14 die photonische Bandgap-Struktur 10. In Fig. 11 B ist eine photonische Bandgap-Struktur 10 dargestellt, die auf zwei Seiten geöffnet ist. Das eintretende Fluid 13 tritt auf einer Seite in die photonische Bandgap-Struktur ein. Das austretende Fluid verlässt die photonische Bandgap-Struktur 10 auf einer anderen Seite der photonischen Bandgap-Struktur 10. Auch wenn in Fig. 11A und 11 B ein Schnitt durch eine photonische Bandgap-Struktur 10 gemäß der Fig. 3A bzw. 3C gezeigt ist, ist es stattdessen auch möglich, photonische Bandgap-Strukturen des Typs wie Abb. 3B oder 3D gezeigt zu verwenden.

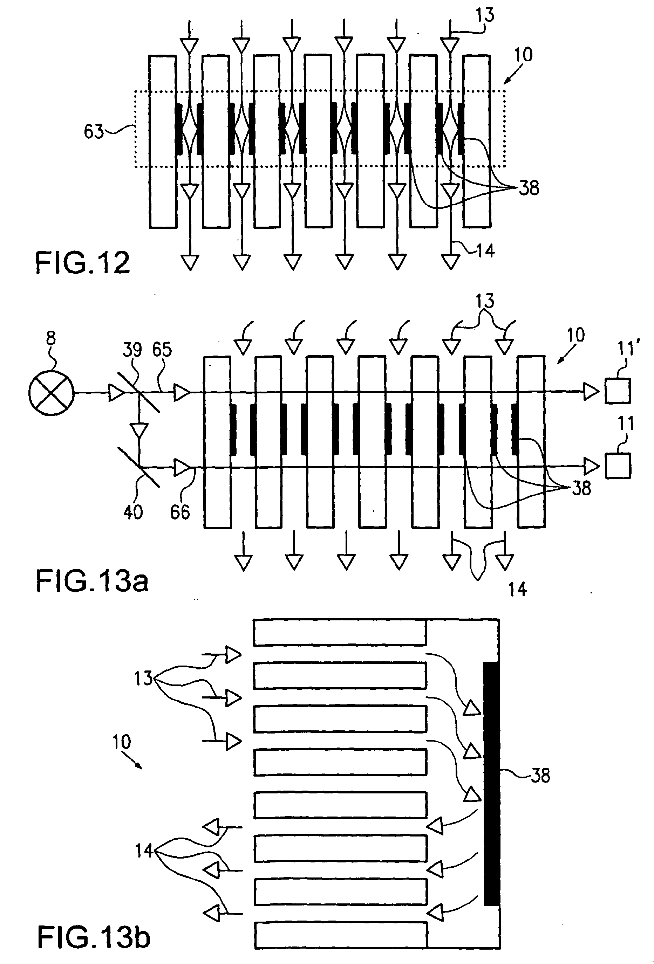

In Fig. 12 ist eine photonische Bandgap-Struktur 10 mit einem integrierten Katalysator 38 gezeigt. Das Fluid 13 tritt auf einer Seite in die photonische Bandgap-Struktur 10 ein, und eine Komponente des Fluids reagiert mit Hilfe des Katalysators 38 gemäß einer spezifischen chemischen Reaktion. Die austretenden Reaktionsprodukte 14 verlassen auf einer anderen Seite die photonische Bandgap-Struktur 10. Denkbar ist hier aber auch ein Einsatz einer photonischen Bandgap-Struktur wie in Fig. 11A dargestellt, die lediglich auf einer Seite 61 geöffnet ist. Auch hier sei darauf hingewiesen, dass die Schnittzeichnung der photonischen Bandgap-Struktur 10, in der Fig. 12 Schnitte der Fig. 3A und 3C darstellt, jedoch auch denkbar wäre, eine photonische Bandgap-Struktur mit einem Katalysator gemäß den Fig. 3B und 3D zu verwenden.

Die Ausführungen von oben bezüglich der Fig. 3A und 3C gelten auch für Fig. 13. In Fig. 13 ist eine erfindungsgemäße Vorrichtung gezeigt, bei der das Licht einer Lichtquelle 8 von einem Strahlteiler 39 in zwei Strahlenbündel aufgeteilt wird. Mit Hilfe eine Spiegels 40 wird das Licht in Richtung der photonischen Bandgap-Struktur 10 abgelenkt. Die photonische Bandgap-Struktur 10 enthält einen Katalysator 38. Das eintretende Fluid 13, welches die Ausgangsprodukte der chemischen Reaktion, die von dem Katalysator 38 katalysiert wird, enthält, wird mittels eines ersten Lichtstrahls 65 vermessen. Der Detektor 11` registriert dabei das durch die photonische Bandgap-Struktur durchgetretene Licht. Das nach Stattfinden der chemischen Reaktion, die durch den Katalysator 38 katalysiert wird, aus der photonischen Bandgap-Struktur 10 austretende Fluid 14 wird mittels eines zweiten Lichtstrahls 66 vermessen. Der Detektor 11 registriert hierbei das Licht, das durch das Fluid getreten ist, das die Endprodukte der chemischen Reaktion enthält.

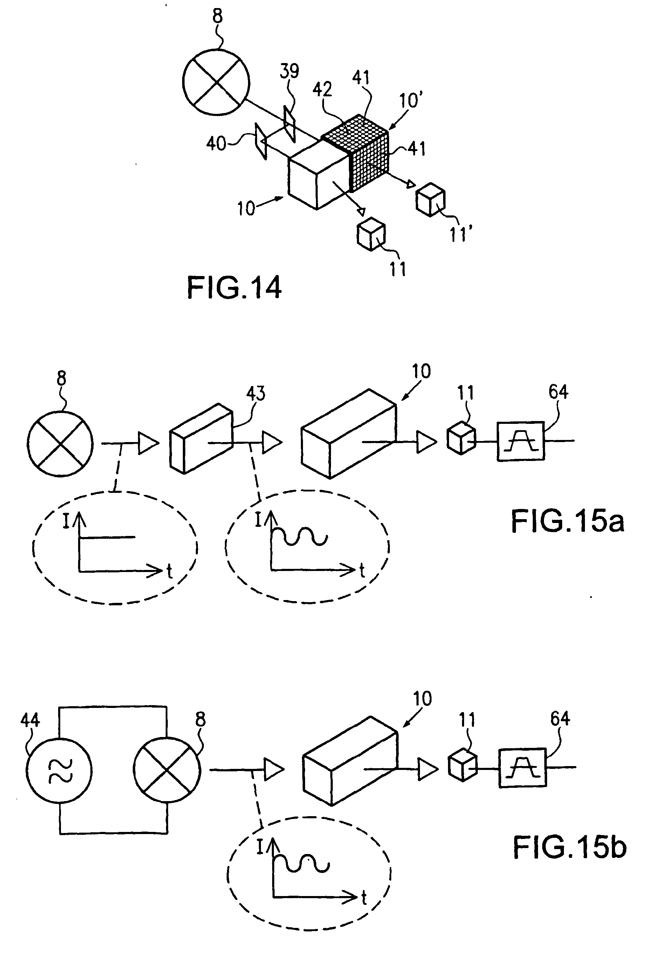

Fig. 14 zeigt ein Ausführungsbeispiel der erfinderischen Vorrichtung, bei dem ein Teil der photonischen Bandgap-Struktur 10' mit einem hermetischen Verschluss 41 ein Referenzfluid 42 enthält. Mittels eines Strahlteilers 39 wird das Licht der Lichtquelle 8 in zwei Strahlbündel aufgeteilt, wobei ein Bündel von einem Spiegel 40 in Richtung der photonischen Bandgap-Struktur abgelenkt wird. Das Licht, das den Referenzbereich 10' der photonischen Bandgap-Struktur durchdringt, wird von dem Detektor 11 vermessen, und das Licht, das durch den Bereich 10 der photonischen Bandgap-Struktur dringt, der das zu analysierende Fluid enthält, wird von dem Detektor 11 vermessen.

Für den Fall einer dreidimensionalen photonischen Bandgap-Struktur 10 ist es abweichend von der Darstellung in Fig. 13 sowie auch für Fig. 14 auch möglich, die photonische Bandgap-Struktur 10 mit beiden Teilstrahlen 65, 66 parallel zur Porenachse zu durchstrahlen. Dies ist für nur einen Strahl in Fig. 7b dargestellt.

In Fig. 13b ist eine weitere Ausführungsform der Erfindung gezeigt, bei der die photonische Bandgap-Struktur 10 und der Katalysator 38 räumlich voneinander getrennt sind. Das Fluid 13 wird in einem Teil der photonischen Bandgap-Struktur 10 zu dem Katalysator 38 hingeführt und nach dem Kontakt mit dem Katalysator 38 wieder durch einen anderen Teil der photonischen Bandgap-Struktur weggeführt und dort vermessen. Alternativ wäre es auch möglich, das Fluid 14 nach Kontakt mit dem Katalysator 38 durch eine zweite photonische Bandgap-Struktur abzuleiten und dort die zweite Messung durchzuführen. Das Licht der ersten Messung durchsetzt die photonische Bandgap-Struktur 10 senkrecht zur Porenachse oder Schichtebene in dem Bereich in dem das Fluid 13 in der photonischen Bandgap-Struktur 10 in Richtung des Katalysators 38 strömt. Auch bei dieser Ausführungsform ist der Einsatz einer dreidimensionalen photonischen Bandgap-Struktur mit Durchstrahlung entlang der Porenachse möglich.

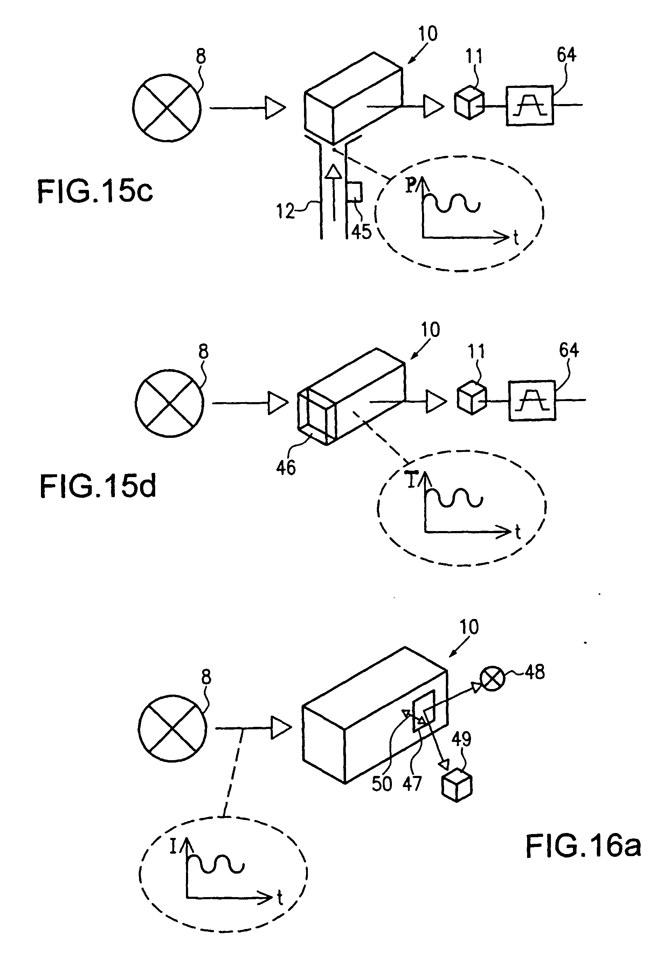

Die Fig. 15 zeigt verschiedene Möglichkeiten, das Messsignal zu modulieren. Fig. 15A zeigt eine Modulationseinrichtung 43, die das Licht, das von der Lichtquelle 8 emittiert wird, moduliert. Während vor der Modulationseinrichtung 43 die Lichtintensität I als Funktion der Zeit t konstant ist, zeigt die Lichtintensität I als Funktion der Zeit t hinter der Modulationseinrichtung 43 einen zeitlich modulierten Verlauf. In Fig. 15B ist eine Strommodulationseinrichtung 44 gezeigt, welche den Strom, mit dem die Lichtquelle 8 versorgt wird, zeitlich moduliert. Wie in Fig. 15B dargestellt, zeigt die Lichtintensität I so als Funktion der Zeit t einen zeitlich variierenden Verlauf. In Fig. 15C ist die Möglichkeit gezeigt, die Signalintensität durch den Druck des Fluids in der photonischen Bandgap-Struktur 10 zu variieren. Eine Druckmodulationseinrichtung 45, die hier beispielsweise in einer Zuleitung 12, die das Fluid der photonischen Bandgap-Struktur 10 zuführt, dargestellt ist, moduliert zeitlich den Druck des Fluids. Dadurch erweitern oder verengen sich die Porenöffnungen oder Freiräume in der photonischen Bandgap-Struktur 10, wodurch sich eine Modulation des Brechungsindexes ergibt. In 15D wird statt des Drucks des Fluids die Temperatur T als Funktion der Zeit t mittels einer Temperaturmodulationseinrichtung 46 zeitlich moduliert. Auch dies führt zu einer zeitlich variablen Änderung der Porengröße und führt somit zu einer zeitlichen Variabilität des Brechungsindexes in der photonischen Bandgap-Struktur 10. Durch die Druckmodulation wie in Fig. 15C dargestellt oder durch die Temperaturmodulation wie in Fig. 15D dargestellt, ergibt sich eine Modulation des optischen Lichtsignals, welches mit dem Detektor 11 registriert wird.

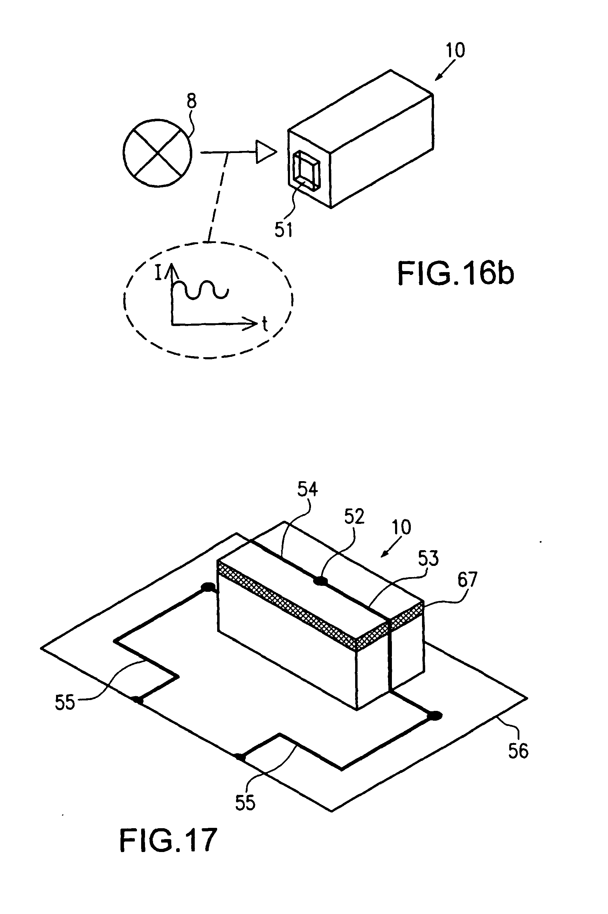

Fig. 16 zeigt eine alternative Detektionsmöglichkeit bezüglich der Wechselwirkung zwischen dem Fluid und dem Licht der Lichtquelle. Die in der Fig. 16 dargestellten Einrichtungen können in jeder voran beschriebenen Ausführungsformen der erfindungsgemäßen Vorrichtung oder Teile der erfindungsgemäßen Vorrichtung verwendet werden. Anstatt das Licht, das die photonische Bandgap-Struktur 10 passiert hat, zu detektieren, um die Absorption des Lichts in der photonischen Bandgap-Struktur zu ermitteln, wird die Eigenschaft ausgenutzt, dass photonische Bandgap-Strukturen oftmals Hohlräume enthalten, die als akustische Resonatoren dienen. Ist die Intensität I des Lichts als Funktion der Zeit t wie in Fig. 16 dargestellt zeitlich moduliert, so ergibt sich innerhalb der photonischen Bandgap-Struktur aufgrund der Absorption des Lichts in dem Fluid eine zeitliche Modulation der Temperatur und damit des Drucks des Fluids in der photonischen Bandgap-Struktur 10. Diese zeitliche Variation des Drucks ist gleichzusetzen mit einer akustischen Anregung des Fluids in der photonischen Bandgap-Struktur 10. Hat die akustische Anregung eine Frequenz, die einer akustische Eigenfrequenz der photonischen Bandgap-Struktur entspricht, so kommt es zu einer resonanten Überhöhung der akustischen Anregung. Somit ist es besonders einfach, eine solche akustische Anregung zu detektieren.

Zum einen ist es wie in Fig. 16A dargestellt möglich, eine Markierung 47 auf der photonischen Bandgap-Struktur 10 anzubringen, die in z.B. Richtung 50 hin- und heroszilliert. Mittels einer zweiten Lichtquelle 48 und eines Markierungslichtdetektors 49 wird die Bewegung der Marke 47 registriert. Eine weitere Möglichkeit, die akustische Anregung in der photonischen Bandgap-Struktur 10 zu detektieren, besteht darin, ein Mikrofon 51 an der photonischen Bandgap-Struktur 10 anzubringen. Alternativ wäre es ebenso möglich, das Mikrofon in einem gewissen Abstand von der photonischen Bandgap-Struktur anzubringen, wobei jedoch zu gewährleisten ist, dass Schall von der photonischen Bandgap-Struktur 10 bis zu dem Mikrofon 51 gelangen kann. Das Mikrofon 51 kann hierbei ein piezoelektrisches Element umfassen, mit dem Schallwellen direkt in elektrische Spannungen umgewandelt werden. Elektrische Spannungen lassen sich bei der Signalauswertung besonders vorteilhaft handhaben. Bei diesem Verfahren wird somit keine direkte Detektion des Lichts, das die photonische Bandgap-Struktur passiert hat, vorgenommen, sondern dadurch, dass es möglich ist, mit Infrarotlicht akustische Anregungen in der photonischen Bandgap-Struktur zu erzeugen und diese Anregungen eventuell resonant überhöht werden, ist es leicht möglich, diese resonant überhöhten Schwingungen mittels eines Mikrofons 51 oder einer Markierung 47 zu detektieren.

Eine spezielle Ausführungsform der Detektionseinrichtung, wie sie in der erfindungsgemäßen Vorrichtung verwendet werden kann, ist in Fig. 17 gezeigt. Auf einer Wärmesenke 56 sind Zuleitungen 55 gezeigt, die vorzugsweise aus einem guten elektrischen Leiter, z.B. Gold, gefertigt sind. Durch zwei weitere Materialien 53, 54, beispielsweise Antimon 53 und Bismuth 54 wird ein thermoelektrischer Kontakt 52 geschaffen, der zwischen den Zuleitungen 53 und 54 liegt. Die Zuleitungen 53 und 54 können hierbei optional beispielsweise über die photonische Bandgap-Struktur 10 laufen. Die Zuleitungen 53, 54 sind vorteilhafterweise von der photonischen Bandgap-Struktur 10 durch eine Isolatorschicht 67 von getrennt. Bei einer Ausführungsform gemäß Fig. 17 wird das Licht beispielsweise von unten in die photonische Bandgap-Struktur 10 eingestrahlt, und der thermoelektrische Kontakt 52 misst die Strahlung, die durch die photonische Bandgap-Struktur hindurchgetreten ist. In diesem Ausführungsbeispiel ist der thermoelektrische Kontakt direkt auf der photonischen Bandgap-Struktur angebracht, jedoch wäre es auch durchaus möglich, den thermoelektrischen Kontakt in einem gewissen Abstand von der photonischen Bandgap-Struktur anzubringen, um so die Strahlung zu detektieren, die die photonische Bandgap-Struktur durchdrungen hat. Vorteilhafterweise wird jedoch wegen der geringen Wärmeleitfähigkeit der porösen Struktur, die thermoelektrische Schicht (mit einer darunterliegenden elektrischen Isolationsschicht) direkt auf der Porenquerschnittsfläche positioniert. Weiterhin ist es ebenfalls möglich, statt eines einzelnen thermoelektrischen Kontakts mehrere thermoelektrische Kontakte zu verwenden, um so an mehreren Stellen innerhalb der erfindungsgemäßen Vorrichtung eine Detektionsmöglichkeit für die Strahlung zu haben. Dies kann zum einen dazu verwendet werden, mittels mehrerer Messungen ein besseres Signal-Rausch-Verhältnis zu erhalten oder aber auch dazu dienen, falls das Licht chromatisch aufgespaltet wird, Licht verschiedener Wellenlängen gleichzeitig zu detektieren.

Das erfindungsgemäße Verfahren wird unter Zuhilfenahme der Ausführungsformen der erfindungsgemäßen Vorrichtung, wie sie in den Figuren dargestellt sind, erläutert.

Bei dem erfindungsgemäßen Verfahren propagiert das Licht einer Lichtquelle 8 in der photonischen Bandgap-Struktur 10 und zwar derart, dass aufgrund der periodischen Brechungsindexvariation in der photonischen Bandgap-Struktur das Licht mit einer deutlich verminderten Gruppengeschwindigkeit propagiert. Das Licht, welches aufgrund der Brechungsindexperiodizität mit einer verminderten Gruppengeschwindigkeit propagiert, kann mit dem Fluid 13 wechselwirken. Hierbei ist es zum einen möglich, dass das Fluid sich räumlich innerhalb des Bereichs der photonischen Bandgap-Struktur befindet, also beispielsweise den Porenfreiräumen oder anderen Öffnungen in der photonischen Bandgap-Struktur eingelassen ist, jedoch ist es auch möglich, dass sich das Fluid nahe bei der photonischen Bandgap-Struktur befindet, so dass das evaneszente Licht, das in der photonischen Bandgap-Struktur aufgrund der Brechungsindexperiodizität mit einer verminderten Gruppengeschwindigkeit propagiert, mit dem Fluid wechselwirkt. Dadurch dass das Licht mit einer verminderten Gruppengeschwindigkeit propagiert, erhöht sich die Verweildauer des Lichts in einem bestimmten Raumbereich. Befindet sich in diesem Raumbereich das zu analysierende Fluid, so ergibt sich hiermit auch eine erhöhte Wechselwirkungszeit zwischen dem Licht und dem Fluid. Dadurch kann das Wechselwirkungsvolumen entsprechend der Erhöhung der Aufenthaltsdauer des Lichts stark verkleinert sein.
Im Allgemeinen wird die photonische Bandgap-Struktur mit dem zu analysierenden Fluid beaufschlagt. Dies kann beispielsweise mit einer schlauchartigen Zuführung oder auch mit Leitblechen oder sonstigen Fluidleitungseinrichtungen geschehen.

Die Wechselwirkung zwischen dem Licht und dem Fluid wird mit einer Detektionseinrichtung detektiert. Diese Detektionseinrichtung kann beispielsweise daraus bestehen, dass ein Lichtdetektor das Licht, das mit dem Fluid gewechselwirkt hat, detektiert. Eine niedrige Lichtintensität entspricht hierbei einer starken Absorption des Lichts durch das Fluid, was auf eine hohe Konzentration einer spezifischen Fluidkomponente schließen lässt, welche bei der Wellenlänge des verwendeten Lichts eine Absorption zeigt. Bei dem erfindungsgemäßen Verfahren kann das Licht einer Lichtquelle von außen in die photonische Bandgap-Struktur eingebracht werden, jedoch ist es auch möglich, dass das Licht innerhalb der photonischen Bandgap-Struktur selber erzeugt wird. Falls das Licht von einer externen Lichtquelle 8 in die photonische Bandgap-Struktur 10 eingebracht werden soll, kann dies dadurch geschehen, dass das Licht einen Freistrahlraumbereich 32 durchdringt oder auch von einer Faser 33 geleitet wird. Ebenfalls ist es möglich, einen integrierten optischen Wellenleiter 34 zu verwenden, der das Licht ebenfalls effizient von einer externen Lichtquelle bis zu der photonischen Bandgap-Struktur leitet. Der Einsatz von optischen Wellenleitern 33, 34 hat den Vorteil, dass die Lichtquelle und die photonische Bandgap-Struktur voneinander getrennt sein können. Dies erhöht die Flexibilität bei der Konstruktion der erfindungsgemäßen Vorrichtung.

Eine weitere Ausführungsform des erfindungsgemäßen Verfahrens besteht darin, ein optisches Element vorzusehen, welches eine chromatische Aufspaltung des Lichts bewirkt. Vorteilhafterweise ist diese chromatische Element direkt durch die photonische Bandgap-Struktur 10 gegeben. Wie in Fig. 10 dargestellt, wird das Licht einer Lichtquelle 8 durch die photonische Bandgap-Struktur 10 chromatisch in verschiedene Teilstrahlen aufgeteilt, die hier von einer Gruppe von Detektoren 37 detektiert werden. Statt einer Gruppe von Detektoren 37 ist es ebenfalls möglich, ein Array von Detektoren zu verwenden. Durch die gleichzeitige Detektion des Lichts mit verschiedenen Wellenlängen ist es möglich, verschiedene Fluidkomponenten gleichzeitig zu bestimmen oder aber auch die Präzision der Bestimmung einer einzelnen Fluidkomponente zu erhöhen. Falls eine Fluidkomponente verschiedene Absorptionslinien hat, können diese verschiedenen Absorptionslinien von verschiedenen Detektoren detektiert werden, und somit wird eine höhere Präzision der Messempfindlichkeit erreicht. Falls verschiedene Fluidkomponenten Absorptionslinien bei verschiedenen Wellenlängenbereichen haben, so können diese verschiedenen Wellenlängenbereiche mit verschiedenen Detektoren detektiert werden, und somit können verschiedene Fluidkomponenten detektiert werden.

Eine Ausführungsform des erfindungsgemäßen Verfahrens besteht darin, das Fluid 13 auf einer Seite 61 der photonischen Bandgap-Struktur einzubringen. Das austretende Fluid verlässt die photonische Bandgap-Struktur auf derselben Seite 61 (Fig. 11A).

Eine weitere Ausführungsform des erfindungsgemäßen Verfahrens besteht darin, das Fluid 13 auf einer Seite in die photonische Bandgap-Struktur 10 eintreten zu lassen. Hier tritt das Fluid 14 an einer anderen Stelle aus der photonischen Bandgap-Struktur wieder aus. Die Seiten, auf denen das Fluid 13 in die photonische Bandgap-Struktur 10 eintritt, und das Fluid 14 aus der photonischen Bandgap-Struktur 10 wieder austritt, müssen nicht zwangsläufig auf entgegengesetzten Seiten der photonischen Bandgap-Struktur liegen. Bei einem schrägen Durchtritt des Fluids durch die photonische Bandgap-Struktur können die zwei verschiedenen Seiten ebenfalls beispielsweise in einem Winkel von 90°, jedoch auch in jedem anderen beliebigen Winkel, angeordnet sein.

Eine besondere Ausführungsform des erfindungsgemäßen Verfahrens besteht darin, das Fluid einer katalytischen chemischen Reaktion zu unterziehen. Hierbei kann eine Fluidkomponente oder aber auch das gesamte Fluid an der katalytischen chemischen Reaktion teilhaben. Wie in Fig. 12 dargestellt, wird das Fluid mit den Ausgangsprodukten der katalytischen chemischen Reaktion in die photonische Bandgap-Struktur 10 eingeleitet und reagiert innerhalb der photonischen Bandgap-Struktur mit dem Katalysator 38. Die Endprodukte der chemisch katalysierten Reaktion treten als Fluid 14 aus der photonischen Bandgap-Struktur wieder aus.

Hierbei kann der Katalysator 38 mittels der Katalysatorheizung 63 selektiv beheizt werden. Die Selektivität der Beheizung kann beispielsweise dadurch erreicht werden, dass das Katalysatormaterial elektromagnetische Strahlung absorbiert, die von dem umgebenden Material nicht absorbiert wird. Emittiert die Katalysatorheizung 63 Infrarotlicht einer Wellenlänge, welche von dem Katalysatormaterial 38 besonders gut absorbiert wird, lässt sich somit eine selektive Heizung des Katalysators erreichen.

Wie in Fig. 13 dargestellt ist es somit beispielsweise möglich, die Ausgangs- und die Endprodukte der chemisch katalysierten Reaktion zu detektieren. Ein Lichtstrahl 65 durchdringt die photonische Bandgap-Struktur in einem Bereich, in dem sich die Ausgangsprodukte der chemisch katalysierten Reaktion befinden. Mit einem Detektor 11' wird so eine Messung der Konzentration der Ausgangsprodukte erreicht. Mit einem zweiten Lichtstrahl 66, der die photonische Bandgap-Struktur in einem Bereich durchtritt, in dem die Endprodukte der chemischen Reaktion, die von dem Katalysator 38 katalysiert wird, vorliegen, wird die Absorption der Endprodukte gemessen. Somit kann die Konzentration der Endprodukte der chemischen Reaktion mit dem Detektor 11 bestimmt werden. Auf diese Art und Weise ist es möglich, den Verlauf der chemischen Reaktion zu verfolgen. Weiterhin ist es möglich, durch Einsatz eines geeigneten Katalysators bezüglich einer speziellen ersten Fluidkomponente eine Umwandlung dieser ersten Fluidkomponente in eine zweite Fluidkomponente zu erreichen, die sich mittels der verwendeten Infrarot-Absorptionsspektroskopie besonders gut nachweisen lässt. Diese Art und Weise ist ein indirekter Nachweis einer Fluidkomponente zu erreichen, die anderenfalls schwerer zu detektieren wäre. Dies ist insbesondere dann von Interesse, falls eine Fluidkomponente detektiert werden soll, die keine oder nur schlecht ausgeprägte Absorptionsbanden aufweist, oder die Absorptionsbanden in einem Frequenzbereich liegen, der aufgrund von technischen Problemen schwer zugänglich ist.

Eine besondere Ausführungsform des erfindungsgemäßen Verfahrens besteht darin, eine Referenzmessung zusammen mit der eigentlichen Messung durchzuführen. Wie in Fig. 14 dargestellt, ist die photonische Bandgap-Struktur in dem Bereich 10' mit einem Referenzfluid 42 durchsetzt, das von einem hermetischen Verschluss 41 eingekapselt ist. Die Zusammensetzung des Referenzfluids 42 ist bekannt. Daher kann das Messsignal des Detektors 11' als Referenzmessung benutzt werden für die Messung mit dem Detektor 11. Der Detektor registriert hierbei das Licht, das die photonische Bandgap-Struktur 10 in einem Bereich durchdringt, in dem die photonische Bandgap-Struktur mit dem zu analysierenden Fluid durchsetzt ist. Die Durchführung einer Referenzmessung erhöht zum einen die Präzision der durchgeführten Messung, zum anderen ist es möglich, die prinzipielle Funktionsweise der erfindungsgemäßen Vorrichtung zu kontrollieren. Liegt das Messsignal, das der Detektor 11' außerhalb eines vorgegebenen Bereiches, der sich aus dem Referenzfluid 42 herleitet, so muss davon ausgegangen werden, dass die erfindungsgemäße Vorrichtung defekt ist.

Eine weitere besondere Ausführungsform des erfindungsgemäßen Verfahrens besteht darin, das Signal, welches von der Detektionseinrichtung bezüglich der Wechselwirkung des Fluids mit dem Licht detektiert wird, zu modulieren. Dies kann zum einen wie in Fig. 15A dargestellt dadurch geschehen, dass eine Modulationseinrichtung 43 die Lichtintensität des Lichts, das auf die photonische Bandgap-Struktur 10 fällt, moduliert. Zusammen mit einer Filtereinrichtung 64, die Frequenzen wegfiltert, die außerhalb des Bereiches liegen, der der Modulationsfrequenz des Lichts, das auf die photonische Bandgap-Struktur 10 entspricht, lässt sich das Signal zu Rausch-Verhältnis deutlich verbessern. Die Filtereinrichtung 64 kann beispielsweise ein Lock-in Verstärker sein jedoch auch ein einfacher Frequenzbandpass.

Eine Modulation der Lichtintensität, die auf die photonische Bandgap-Struktur fällt, kann auch dadurch erreicht werden, dass die Stromversorgung 44, die die Lichtquelle 8 mit Strom versorgt, einen modulierten Strom abgibt. Dadurch wird direkt eine modulierte Lichtintensität von der Lichtquelle 8 emittiert, die auf die photonische Bandgap-Struktur 10 fällt. Wie in Fig. 15C und 15D dargestellt ist, besteht auch die Möglichkeit, das Signal durch eine Oszillation der mechanischen Struktur der photonischen Bandgap-Struktur 10 zu erreichen. Dies kann zum einen durch eine Modulation des Fluids mittels einer Druckmodulationseinrichtung 45 geschehen, die hier beispielsweise in einem Zulauf 12 zu der photonischen Bandgap-Struktur dargestellt ist. Mittels einer Temperaturmodulationseinrichtung 46, wie in Fig. 15D dargestellt, ist es auch möglich, die Temperatur der photonischen Bandgap-Struktur zeitlich zu variieren. Ebenso wie bei der Druckmodulation aus Fig. 15C bewirkt die Temperaturmodulation eine zeitliche Änderung der Größe der photonischen Bandgap-Struktur und somit auch der optischen Eigenschaften der photonischen Bandgap-Struktur. Dadurch wird das Signal, welches die photonische Bandgap-Struktur verlässt und in Richtung des Detektors 11 austritt, zeitlich moduliert sein. Zusammen mit dem Filter 64 lässt sich somit ein erhöhtes Signal-Rausch-Verhältnis erreichen.

Eine weitere Ausführungsform des erfindungsgemäßen Verfahrens besteht darin, die akustischen Resonatoreigenschaften einer photonischen Bandgap-Struktur auszunutzen. Durch Poren oder Öffnungen in der photonischen Bandgap-Struktur ergeben sich sehr gute akustische Resonatoren mit einer deutlich ausgeprägten Eigenfrequenz. Hat das Licht, welches auf die photonische Bandgap-Struktur 10 fällt, eine zeitlich modulierte Intensität, so ergibt sich aufgrund der Absorption des Lichts in dem Fluid in der photonischen Bandgap-Struktur eine zeitliche Modulation der Temperatur bzw. des Drucks des Fluids. Ist die zeitliche Oszillation des Drucks auf die Eigenfrequenz des akustischen Resonators abgestimmt, so ergibt sich eine resonante Überhöhung der akustischen Oszillation. So eine akustische Oszillation kann beispielsweise einfach mittels eines Mikrofons 51 wie in Fig. 16B dargestellt registriert werden. Besonders vorteilhaft ist hierbei ein Mikrofon vorzusehen, das ein piezoelektrisches Element umfasst, da ein solches Element Druckschwankungen direkt in elektrische Signale umwandelt.

Eine weitere Möglichkeit, das erfindungsgemäße Verfahren durchzuführen, besteht darin, eine Markierung 50, beispielsweise einen Spiegel oder ein optisches Fadenkreuz oder eine Markierung mit z.B. stark unterschiedlichen Helligkeitswerten, auf der photonischen Bandgap-Struktur 10 anzubringen. Durch die akustische Oszillation der photonischen Bandgap-Struktur oszilliert auch die Markierung 47 auf der photonischen Bandgap-Struktur 10. Diese Oszillation kann beispielsweise in Richtung 50 erfolgen. Eine optische Detektion der Markierung 47 kann beispielsweise mittels einer Beleuchtung 48 und einem Markierungslichtdetektor 49 erfolgen.

## Patentansprüche

1. Vorrichtung zur Analyse der qualitativen und/oder quantitativen Zusammensetzung von Fluiden (13, 14) mit:
- zumindest einer Lichtquelle (8),
- zumindest einem Wechselwirkungsraumgebiet (57), das sowohl zumindest teilweise von dem Fluid (13, 14) als auch zumindest teilweise von dem Licht der Lichtquelle (8) durchsetzbar ist, und in dem eine Wechselwirkung zwischen zumindest einem Teil des Fluids (13, 14) und einem Teil des Lichts der Lichtquelle (8) möglich ist, und
- zumindest einer Detektionseinrichtung (11, 11', 51, 47, 48, 49, 37) zur Erfassung der Wechselwirkung zwischen Fluid (13, 14) und Licht der Lichtquelle (8)
**dadurch gekennzeichnet, dass**
zumindest eine photonische Bandgap-Struktur (10) vorgesehen ist, und für zumindest einen Teil des Lichts der Lichtquelle (8) im Bereich des Wechselwirkungsraumgebietes (57) aufgrund der Brechungsindexperiodizität der photonischen Bandgap-Struktur (10) in dem Wechselwirhungsraum gebiet (57) zumindest bezüglich einer Ausbreitungsrichtung des Lichts eine im Vergleich zum Vakuum verminderte, von Null verschiedene, Gruppengeschwindigkeit vorliegt.

2. Vorrichtung nach Anspruch 1, **dadurch gekennzeichnet, dass** die Lichtquelle (8) polychromatisch ist.

3. Vorrichtung nach Anspruch 1, **dadurch gekennzeichnet, dass** die Lichtquelle (8) monochromatisch ist.

4. Vorrichtung nach einem der Ansprüche 1 bis 3, **dadurch gekennzeichnet, dass** die Lichtquelle (8) eine Glühlampe, eine lichtemittierende Diode, einen Laser, eine Laserdiode, einen Quanten-Kaskaden-Laser, eine Lumineszenzlichtquelle, einen selektiven thermischen Strahler oder einen schwarzen Strahler umfasst.

5. Vorrichtung nach einem der Ansprüche 1 bis 4, **dadurch gekennzeichnet, dass** die Lichtquelle (8) eine Infrarotlichtquelle umfasst.

6. Vorrichtung nach einem der Ansprüche 1 bis 5, **dadurch gekennzeichnet, dass** die Lichtquelle (8) räumlich in die photonische Bandgap-Struktur (10) integriert ist.

7. Vorrichtung nach einem der Ansprüche 1 bis 6, **dadurch gekennzeichnet, dass** die Lichtquelle (8) in die photonische Bandgap-Struktur (10) integriert ist, und sie von einer optischen Kavität umgeben ist.

8. Vorrichtung nach einem der Ansprüche 1 bis 5, **dadurch gekennzeichnet, dass** die Lichtquelle (8) in Form einer Schicht auf die photonische Bandgap-Struktur (10) aufgebracht ist.

9. Vorrichtung nach einem der Ansprüche 1 bis 5, **dadurch gekennzeichnet, dass** die Vorrichtung einen Freistrahlraum (32) für die Propagation des Lichts der Lichtquelle (8) in Richtung der photonischen Bandgap-Struktur (10) umfasst.

10. Vorrichtung nach einem der Ansprüche 1 bis 5, **dadurch gekennzeichnet, dass** ein Lichtwellenleiter in Form einer Faser (33) für die Lichtleitung des Lichts auf dem Weg von der Lichtquelle (8) zu der photonischen Bandgap-Struktur (10) vorgesehen ist.

11. Vorrichtung nach einem der Ansprüche 1 bis 5, **dadurch gekennzeichnet, dass** ein integrierter optischer Wellenleiter (34) für die Lichtleitung des Lichts auf dem Weg von der Lichtquelle (8) zu der photonischen Bandgap-Struktur (10) vorgesehen ist.

12. Vorrichtung nach einem der Ansprüche 1 bis 11, **dadurch gekennzeichnet, dass** eine ein-, zwei- oder dreidimensionale Brechungsindexperiodizität der photonischen Bandgap-Struktur (10) vorgesehen ist.

13. Vorrichtung nach einem der Ansprüche 1 bis 12, **dadurch gekennzeichnet, dass** die Geometrie der photonischen Bandgap-Struktur (10) so beschaffen ist, dass die Bandlücke (7) der photonischen Bandgap-Struktur (10) im Wesentlichen gerade oberhalb oder gerade unterhalb einer spezifischen Frequenz des von der Lichtquelle (8) emittierten Lichts liegt.

14. Vorrichtung nach einem der Ansprüche 1 bis 13, **dadurch gekennzeichnet, dass** in der photonischen Bandgap-Struktur (10) die Bereiche mit einem erniedrigten oder einem erhöhten Brechungsindex (15) durch Poren in einem Material realisiert sind.

15. Vorrichtung nach einem der Ansprüche 1 bis 14, **dadurch gekennzeichnet, dass** die Poren (15) den Bereich der photonischen Bandgap-Struktur (10) mit dem niedrigeren Brechungsindex umfassen und die Geometrie der photonischen Bandgap-Struktur (10) so beschaffen ist, dass die Bandlücke (7) gerade unterhalb der Frequenz einer spezifischen Lichtfrequenz, die von der Lichtquelle (8) emittiert wird, liegt.

16. Vorrichtung nach einem der Ansprüche 1 bis 15, **dadurch gekennzeichnet, dass** die Bereiche mit dem erhöhten (59) und mit dem erniedrigen (58) Brechungsindex die Form von Schichten aufweisen.

17. Vorrichtung nach Anspruch 16, **dadurch gekennzeichnet, dass** die Schichten (58, 59) entlang einer spezifischen Richtung in der Schichtebene eine periodische Variation ihrer Schichtdicke aufweisen.

18. Vorrichtung nach einem der Ansprüche 1 bis 15, **dadurch gekennzeichnet, dass** die Bereiche mit einem erniedrigen oder einem erhöhten Brechungsindex (15) die Form von Säulen aufweisen.

19. Vorrichtung nach Anspruch 18, **dadurch gekennzeichnet, dass** die Säulen (15) einen kreisförmigen (16), dreieckigen (17), viereckigen (18), quadratischen (18), rechteckigen (19), rautenförmigen (20), polygonförmigen (21) oder unregelmäßig geformten (22) oder hexagonalen (23) Querschnitt haben.

20. Vorrichtung nach Anspruch 18 oder 19, **dadurch gekennzeichnet, dass** die Stirnseiten der Säulen (15) ein periodisches flächendeckendes Muster bilden.

21. Vorrichtung nach einem der Ansprüche 18 bis 20, **dadurch gekennzeichnet, dass** die Stirnflächen der Säulen (15) in einem periodischen flächendeckenden Muster mit einer hexagonalen (25), rhomboedrischen (26), rautenförmigen (27), quadratischen (28) oder rechteckigen (29) Einheitszelle vorgesehen sind.

22. Vorrichtung nach einem der Ansprüche 18 bis 21, **dadurch gekennzeichnet, dass** die Säulen (15) entlang ihrer längsten Ausdehnung eine Periodizität der Querschnittsfläche senkrecht zu der längsten Ausdehnungsrichtung aufweisen.

23. Vorrichtung nach einem der Ansprüche 1 bis 22, **dadurch gekennzeichnet, dass** zumindest ein Teil der photonischen Bandgap-Struktur (10) offene Freiräume (15) umfasst, von denen zumindest ein Teil das zu analysierende Fluid (13,14) enthält.

24. Vorrichtung nach Anspruch 23, **dadurch gekennzeichnet, dass** zumindest ein Teil der Freiräume (15) auf zumindest einer Seite der photonischen Bandgap-Struktur (10) offen sind.

25. Vorrichtung nach einem der Ansprüche 23 oder 24, **dadurch gekennzeichnet, dass** die Freiräume (15) auf zumindest zwei Seiten der photonischen Bandgap-Struktur (10) offen sind.

26. Vorrichtung nach einem der Ansprüche 1 bis 25, **dadurch gekennzeichnet, dass** die photonische Bandgap-Struktur (10) zumindest auf einer Seite (35, 36) der photonischen Bandgap-Struktur (10) ein gradiertes Brechungsindexprofil aufweist.

27. Vorrichtung nach Anspruch 26, **dadurch gekennzeichnet, dass** das gradierte Brechungsindexprofil durch eine Veränderung der Periodizitätslänge realisiert ist.

28. Vorrichtung nach einem der Ansprüche 26 oder 27, **dadurch gekennzeichnet, dass** das gradierte Brechungsindexprofil durch Variation der geometrischen Abmessungen der Bereiche mit erhöhtem und erniedrigtem Brechungsindex realisiert ist.

29. Vorrichtung nach einem der Ansprüche 1 bis 28, **dadurch gekennzeichnet, dass** die photonische Bandgap-Struktur (10) einen Referenzbereich (10') umfasst, in dem sich ein Referenzfluid (42) befindet, dessen Eigenschaften und Zusammensetzung als Referenz für die Messung des zu analysierenden Fluids (13, 14) herangezogen werden können.

30. Vorrichtung nach Anspruch 29, **dadurch gekennzeichnet, dass** der Referenzbereich (10') der photonischen Bandgap-Struktur (10) zumindest auf einer Seite von der übrigen photonischen Bandgap-Struktur (10) getrennt ist.

31. Vorrichtung nach einem der Ansprüche 29 oder 30, **dadurch gekennzeichnet, dass** das Referenzfluid (42) in dem Referenzbereich (10') der photonischen Bandgap-Struktur (10) hermetisch durch einen hermetischen Verschluss (41) eingeschlossen ist.

32. Vorrichtung nach einem der Ansprüche 1 bis 31, **dadurch gekennzeichnet, dass** die photonische Bandgap-Struktur (10) die Form eines Prismas aufweist.

33. Vorrichtung nach einem der Ansprüche 1, bis 32, **dadurch gekennzeichnet, dass** die photonische Bandgap-Struktur (10) derart gestaltet ist, dass das Licht chromatisch aufgespalten wird.

34. Vorrichtung nach einem der Ansprüche 1 bis 33, **dadurch gekennzeichnet, dass** die photonische Bandgap-Struktur (10) ein Brechungsindexprofil (30, 31) aufweist, wodurch sich eine chromatische Aufspaltung des Lichts ergibt.

35. Vorrichtung nach einem der Ansprüche 1 bis 34, **dadurch gekennzeichnet, dass** innerhalb der Vorrichtung beispielsweise innerhalb der photonischen Bandgap-Struktur (10) ein Katalysator (38) vorgesehen ist, der zumindest auf eine Komponente des zu analysierenden Fluids (13, 14) eine katalytische Wirkung hat.

36. Vorrichtung nach Anspruch 35, **dadurch gekennzeichnet, dass** der Katalysator (38) ganz oder zumindest teilweise auf den Innenseiten der Freiräume (15), die das zu analysierende Fluid (13, 14) umfassen, vorgesehen ist.

37. Vorrichtung nach einem der Ansprüche 35 oder 36, **dadurch gekennzeichnet, dass** eine Heizeinrichtung (63) zum selektiven Beheizen des Katalysators (38) vorgesehen ist.

38. Vorrichtung nach einem der Ansprüche 1 bis 37, **dadurch gekennzeichnet, dass** die photonische Bandgap-Struktur (10) im Wesentlichen ein Material umfasst, das zumindest für eine der Wellenlängen des Lichts, das von der Lichtquelle (8) emittiert wird, im Wesentlichen transparent ist.

39. Vorrichtung nach einem der Ansprüche 1 bis 38, **dadurch gekennzeichnet, dass** die photonische Bandgap-Struktur (10) im Wesentlichen Silizium, welches vorzugsweise monokristallin ist, umfasst.

40. Vorrichtung nach einem der Ansprüche 1 bis 39, **dadurch gekennzeichnet, dass** eine Modulationseinrichtung (43) zur zeitlichen Modulation der Lichtintensität des von der Lichtquelle (8) emittierten Lichts vorgesehen ist.

41. Vorrichtung nach einem der Ansprüche 1 bis 40, **dadurch gekennzeichnet, dass** eine Strommodulationseinrichtung (44) zur zeitlichen Modulation des Stroms, mit dem die Lichtquelle (8) versorgt wird, vorgesehen ist.

42. Vorrichtung nach einem der Ansprüche 1 bis 41, **dadurch gekennzeichnet, dass** eine Fluiddruckmodulationseinrichtung (45) zur zeitlichen Modulation des Drucks des zu analysierenden Fluids (13,14) vorgesehen ist.

43. Vorrichtung nach einem der Ansprüche 1 bis 42, **dadurch gekennzeichnet, dass** eine Temperaturmodulationseinrichtung (46) zur zeitlichen Modulation der Temperatur der photonischen Bandgap-Struktur (10) vorgesehen ist.

44. Vorrichtung nach einem der Ansprüche 1 bis 43, **dadurch gekennzeichnet, dass** als Detektor ein Lichtdetektor (11) für das Licht, das mit dem zu analysierenden Fluid wechselgewirkt hat, vorgesehen ist.

45. Vorrichtung nach einem der Ansprüche 1 bis 44, **dadurch gekennzeichnet, dass** als Detektor ein diskreter Detektor (11) vorgesehen ist.

46. Vorrichtung nach einem der Ansprüche 1 bis 44, **dadurch gekennzeichnet, dass** als Detektor ein mehrteiliger Lichtdetektor (37) zur Detektion des Lichts an mehreren Stellen in der Vorrichtung vorgesehen ist.

47. Vorrichtung nach einem der Ansprüche 1 bis 46, **dadurch gekennzeichnet, dass** als Detektor ein thermoelektrisches Element (52) vorgesehen ist.

48. Vorrichtung nach Anspruch 47, **dadurch gekennzeichnet, dass** das thermoelektrische Element (52) in Form von Schichten vorgesehen ist.

49. Vorrichtung nach einem der Ansprüche 47 oder 48, **dadurch gekennzeichnet, dass** das thermoelektrische Element (52) Antimon (54) und/oder Bismuth (53) enthält.

50. Vorrichtung nach einem der Ansprüche 1 bis 49, **dadurch gekennzeichnet, dass** die Lichtintensität des von der Lichtquelle (8) ausgestrahlten Lichts mit einer Frequenz moduliert ist, die der akustischen Frequenz einer akustischen Resonatormode der photonischen Bandgap-Struktur (10) im Wesentlichen entspricht.

51. Vorrichtung nach Anspruch 50, **dadurch gekennzeichnet, dass** ein Mikrofon (51) zur Detektion der akustischen Schwingungen in der photonischen Bandgap-Struktur (10) vorgesehen ist.

52. Vorrichtung nach Anspruch 51, **dadurch gekennzeichnet, dass** das Mikrofon (51) ein piezoelektrisches Element umfasst.

53. Vorrichtung nach einem der Ansprüche 50 bis 52, **dadurch gekennzeichnet, dass** eine Markierung (47) auf der photonischen Bandgap-Struktur (10) angebracht ist, und diese Markierung (47) sich mit derjenigen Frequenz bewegt, mit der die photonische Bandgap-Struktur (10), angeregt durch das Licht, mit einer Eigenfrequenz oszilliert.

54. Vorrichtung nach Anspruch 53, **dadurch gekennzeichnet, dass** ein Markierungslichtdetektor (49) zur optischen Detektion der Bewegung (50) der Markierung (47) vorgesehen ist.

55. Vorrichtung nach einem der Ansprüche 40 bis 54, **dadurch gekennzeichnet, dass** eine Filtereinrichtung (64) zur Filterung des Ausgabesignals von dem Detektor (11, 51, 49) vorgesehen ist.

56. Vorrichtung nach Anspruch 55, **dadurch gekennzeichnet, dass** der Filter (64) zum Durchlass im Wesentlichen der Signalkomponente mit der Frequenz, die der Frequenz der Modulation der Lichtintensität , des Fluiddrucks des zu analysierenden Fluids oder der Temperatur der photonischen Bandgap-Struktur (10) entspricht, vorgesehen ist.

57. Vorrichtung nach einem der Ansprüche 14 bis 56, **dadurch gekennzeichnet, dass** das Licht im Wesentlichen zur Propagation quer zur Porenachse in der photonischen Bandgap-Struktur (10) vorgesehen ist.

58. Vorrichtung nach einem der Ansprüche 14 bis 56, **dadurch gekennzeichnet, dass** das Licht im Wesentlichen zur Propagation parallel zur Porenachse in der photonischen Bandgap-Struktur (10) vorgesehen ist.

59. Vorrichtung nach einem der Ansprüche 1 bis 58, **dadurch gekennzeichnet, dass** eine schlauchartige Einleiteinrichtung (12) zur Einleitung des zu analysierenden Fluids (13,14) in Richtung der photonischen Bandgap-Struktur (10) vorgesehen ist.

60. Vorrichtung nach einem der Ansprüche 1 bis 59, **dadurch gekennzeichnet, dass** eine Fluteinrichtung (12) zum Fluten der photonischen Bandgap-Struktur (10) mit dem zu analysierenden Fluid (13,14) vorgesehen ist.

61. Vorrichtung nach einem der Ansprüche 1 bis 60, **dadurch gekennzeichnet, dass** die photonische Bandgap-Struktur (10) in eine mikromechanische Flusszelle integriert ist.

62. Verfahren zur Analyse der qualitativen und/oder quantitativen Zusammensetzung von Fluiden unter Verwendung einer Lichtquelle (8) und einer Detektionseinrichtung (11, 11, 37, 51, 47, 48, 49) zur Detektion der Wechselwirkung des von der Lichtquelle (8) ausgesandten Lichts mit dem Fluid (13,14) in einem Wechselwirkungsraumgebiet (57) **dadurch gekennzeichnet, dass** zumindest ein Teil des Lichts der Lichtquelle (8) im Bereich des Wechselwirkungsraumgebietes (57) aufgrund der Brechungsindexperiodizität einer photonischen Bandgap-Struktur (10) in dem Wechselwirkungsraumgebiet (57) mit einer im Vergleich zum Vakuum verminderten, von Null verschiedenen, Gruppengeschwindigkeit propagiert und in diesem mit dem zu analysierenden Fluid (13,14) wechselwirkt.

63. Verfahren nach Anspruch 62, **dadurch gekennzeichnet, dass** die photonische Bandgap-Struktur (10) mit dem zu analysierenden Fluid (13,14) beaufschlagt wird.

64. Verfahren nach Anspruch 62 oder 63, **dadurch gekennzeichnet, dass** Freiräume (15) in der photonischen Bandgap-Struktur (10) von einer Seite (61) der photonischen Bandgap-Struktur (10) her mit dem zu analysierenden Fluid (13,14) gefüllt werden.

65. Verfahren nach einem der Ansprüche 62 bis 64, **dadurch gekennzeichnet, dass** das zu analysierende Fluid (13, 14) durch die photonische Bandgap-Struktur (10) hindurchgeleitet wird.

66. Verfahren nach einem der Ansprüche 62 bis 65, **dadurch gekennzeichnet, dass** die Intensität des Lichts das von der Lichtquelle (8) ausgesandt wird, zeitlich moduliert ist.

67. Verfahren nach einem der Ansprüche 62 bis 66, **dadurch gekennzeichnet, dass** die Temperatur der photonischen Bandgap-Struktur (10) moduliert wird.

68. Verfahren nach einem der Ansprüche 62 bis 67, **dadurch gekennzeichnet, dass** der Strom, mit dem die Lichtquelle (8) versorgt wird, zeitlich moduliert wird.

69. Verfahren nach einem der Ansprüche 62 bis 68, **dadurch gekennzeichnet, dass** der Druck des zu analysierenden Fluids (13,14) zeitlich moduliert wird.

70. Verfahren nach einem der Ansprüche 62 bis 69, **dadurch gekennzeichnet, dass** eine chemische Reaktion an der mindestens eine Komponente des zu analysierenden Fluids (13,14) beteiligt ist innerhalb der photonischen Bandgap-Struktur (10) katalysiert wird.

71. Verfahren nach Anspruch 70, **dadurch gekennzeichnet, dass** das Ausgangsprodukt der chemischen Reaktion, die katalysiert wird, qualitativ und/oder quantitativ analysiert wird.

72. Verfahren nach einem der Ansprüche 70 oder 71, **dadurch gekennzeichnet, dass** das Endprodukt der chemischen Reaktion, die katalysiert wird, qualitativ und/oder quantitativ analysiert wird.

73. Verfahren nach einem der Ansprüche 62 bis 72, **dadurch gekennzeichnet, dass** ein Katalysator (38) beheizt wird.

74. Verfahren nach einem der Ansprüche 62 bis 73, **dadurch gekennzeichnet, dass** eine Referenzanalyse eines bekannten Referenzfluids (42) durchgeführt wird.

75. Verfahren nach einem der Ansprüche 72 bis 74, **dadurch gekennzeichnet, dass** das Ausgangssignal des Detektors (11, 11', 49, 51) gefiltert wird, und im Wesentlichen nur diejenigen Signalkomponenten, die einer spezifischen Modulationsfrequenz entsprechen, nicht weggefiltert werden.

76. Verfahren nach einem der Ansprüche 62 bis 75, **dadurch gekennzeichnet, dass** das Licht, das auf die photonische Bandgap-Struktur (10) fällt, dispersiv aufgespaltet wird.

77. Verfahren nach Anspruch 76, **dadurch gekennzeichnet, dass** das Licht spektral aufgelöst detektiert wird.

78. Verfahren nach Anspruch 62 bis 77, **dadurch gekennzeichnet, dass** in der photonischen Bandgap-Struktur (10) im Wesentlichen Licht propagiert, das einer Absorptionslinie oder Absorptionsbande derjenigen Fluidkomponente (13,14) entspricht, die bevorzugterweise qualitativ und/oder quantitativ analysiert wird.

## Claims

1. A device for the analysis of the qualitative and/or quantitative composition of fluids (13, 14) with:
- at least one light source (8),
- at least one interaction space area (57) which can be penetrated both at least partly by the fluid (13, 14) and at least partly by the light from the light source (8) and in which an interaction between at least a part of the fluid (13, 14) and a part of the light from the light source (8) is possible, and
- at least one detection device (11, 11', 51, 47, 48, 49, 37) for detecting the interaction between the fluid (13, 14) and the light from the light source (8),
**characterised in that**
at least one photonic band gap structure (10) is provided, and for at least a part of the light from the light source (8) in the area of the interaction space area (57) due to the refractive index periodicity of the photonic band gap structure (10) in the interaction space area (57) at least as regards one propagation direction of the light a group velocity exists which is reduced compared to a vacuum and which is not zero.

2. The device according to claim 1, **characterised in that** the light source (8) is polychromatic.

3. The device according to claim 1, **characterised in that** the light source (8) is monochromatic.

4. The device according to one of the claims 1 to 3, **characterised in that** the light source (8) is a filament lamp, a light-emitting diode, a laser, a laser diode, a quantum cascade laser, a luminescent light source, a selective thermal emitter or a black emitter.

5. The device according to one of the claims 1 to 4, **characterised in that** the light source (8) includes an infrared light source.

6. The device according to one of the claims 1 to 5, **characterised in that** the light source (8) is integrated spatially into the photonic band gap structure (10).

7. The device according to one of the claims 1 to 6, **characterised in that** the light source (8) is integrated into the photonic band gap structure (10) and is surrounded by an optical cavity.

8. The device according to one of the claims 1 to 5, **characterised in that** the light source (8) is applied in the form of a layer onto the photonic band gap structure (10).

9. The device according to one of the claims 1 to 5, **characterised in that** the device includes a free radiation space (32) for the propagation of the light from the light source (8) in the direction of the photonic band gap structure (10).

10. The device according to one of the claims 1 to 5, **characterised in that** a light wave guide in the form of a fibre (33) is provided for guiding the light on the way from the light source (8) to the photonic band gap structure (10).

11. The device according to one of the claims 1 to 5, **characterised in that** an integrated optical waveguide (34) is provided for guiding the light on the way from the light source (8) to the photonic band gap structure (10).

12. The device according to one of the claims 1 to 11, **characterised in that** a one, two or three dimensional refractive index periodicity of the photonic band gap structure (10) is provided.

13. The device according to one of the claims 1 to 12, **characterised in that** the geometry of the photonic band gap structure (10) is such that the band gap (7) of the photonic band gap structure (10) is essentially located immediately above or immediately below a specific frequency of the light emitted by the light source (8).

14. The device according to one of the claims 1 to 13, **characterised in that** in the photonic band gap structure (10) the areas with a reduced or an increased refractive index (15) are realised by pores in a material.

15. The device according to one of the claims 1 to 14, **characterised in that** the pores (15) enclose the area of the photonic band gap structure (10) with the lower refractive index and the geometry of the photonic band gap structure (10) is such that the band gap (7) is immediately below the frequency of a specific light frequency which is emitted by the light source (8).

16. The device according to one of the claims 1 to 15, **characterised in that** the areas with the increased (59) and reduced (58) refractive index are in the form of layers.

17. The device according to claim 16, **characterised in that** the layers (58, 59) along a specific direction in the plane of the layers show a periodic variation in their layer thickness.

18. The device according to one of the claims 1 to 15, **characterised in that** the areas with a reduced or an increased refractive index (15) are in the form of pillars.

19. The device according to claim 18, **characterised in that** the pillars (15) have a circular (16), triangular (17), square (18), quadratic (18), rectangular (19), lozenge-shaped (20), polygonal (21) or irregularly shaped (22) or hexagonal (23) cross-section.

20. The device according to claim 18 or 19, **characterised in that** the front ends of the pillars (15) form an overall periodic pattern.

21. The device according to one of the claims 18 to 20, **characterised in that** the front surfaces of the pillars (15) in an overall periodic pattern are provided with a hexagonal (25), rhomboid (26), lozenge-shaped (27), square (28) or rectangular (29) unit cell.

22. The device according to one of the claims 18 to 21, **characterised in that** the pillars (15) show, along their longest extension, a periodicity of the cross-sectional area perpendicular to the longest direction of extension.

23. The device according to one of the claims 1 to 22, **characterised in that** at least a part of the photonic band gap structure (10) contains open free spaces (15), at least a part of which contains the fluid (13, 14) to be analysed.

24. The device according to claim 23, **characterised in that** at least a part of the free spaces (15) are open on at least one side of the photonic band gap structure (10).

25. The device according to one of the claims 23 or 24, **characterised in that** the free spaces (15) are open on at least two sides of the photonic band gap structure (10).

26. The device according to one of the claims 1 to 25, **characterised in that** the photonic band gap structure (10) shows a graduated refractive index profile at least on one side (35, 36) of the photonic band gap structure (10).

27. The device according to claim 26, **characterised in that** the graduated refractive index profile is realised by a change in the periodicity length.

28. The device according to one of the claims 26 or 27, **characterised in that** the graduated refractive index profile is realised by variation in the geometric dimensions of the areas with increased and reduced refractive index.

29. The device according to one of the claims 1 to 28, **characterised in that** the photonic band gap structure (10) includes a reference area (10') containing a reference fluid (42) the characteristics and composition of which can be used as a reference for the measurement of the fluid (13, 14) to be analysed.

30. The device according to claim 29, **characterised in that** the reference area (10') of the photonic band gap structure (10) is separated at least on one side from the remaining photonic band gap structure (10).

31. The device according to one of the claims 29 or 30, **characterised in that** the reference fluid (42) in the reference area (10') of the photonic band gap structure (10) is enclosed hermetically by a hermetic closure (41).

32. The device according to one of the claims 1 to 31, **characterised in that** the photonic band gap structure (10) takes the form of a prism.

33. The device according to one of the claims 1 to 32, **characterised in that** the photonic band gap structure (10) is made in such a way that the light is split chromatically.

34. The device according to one of the claims 1 to 33, **characterised in that** the photonic band gap structure (10) has a refractive index profile (30, 31) resulting in a chromatic splitting of the light.

35. The device according to one of the claims 1 to 34, **characterised in that** within the device for example within the photonic band gap structure (10) a catalyst (38) is provided which has a catalytic effect at least on one component of the fluid (13, 14) to be analysed.

36. The device according to claim 35, **characterised in that** the catalyst (38) is provided wholly or at least partly on the insides of the free spaces (15) enclosing the fluid (13, 14) to be analysed.

37. The device according to one of the claims 35 or 36, **characterised in that** a heater (63) is provided for the selective heating of the catalyst (38).

38. The device according to one of the claims 1 to 37, **characterised in that** the photonic band gap structure (10) essentially contains a material that is essentially transparent at least for one of the wavelengths of the light that is emitted from the light source (8).

39. The device according to one of the claims 1 to 38, **characterised in that** the photonic band gap structure (10) essentially contains silicon which is preferably monocrystalline.

40. The device according to one of the claims 1 to 39, **characterised in that** a modulation device (43) is provided for the modulation over time of the intensity of the light emitted by the light source (8).

41. The device according to one of the claims 1 to 40, **characterised in that** a power modulation device (44) is provided for the modulation over time of the power with which the light source (8) is supplied.

42. The device according to one of the claims 1 to 41, **characterised in that** a fluid pressure modulation device (45) is provided for the modulation over time of the pressure of the fluid (13, 14) to be analysed.

43. The device according to one of the claims 1 to 42, **characterised in that** a temperature modulation device (46) is provided for the modulation over time of the temperature of the photonic band gap structure (10).

44. The device according to one of the claims 1 to 43, **characterised in that** a light detector (11) is provided as the detector for the light that has interacted with the fluid to be analysed.

45. The device according to one of the claims 1 to 44, **characterised in that** a discrete detector (11) is provided as the detector.

46. The device according to one of the claims 1 to 44, **characterised in that** a multiple light detector (37) is provided as the detector for detection of the light at several points in the device.

47. The device according to one of the claims 1 to 46, **characterised in that** a thermoelectric element (52) is provided as the detector.

48. The device according to claim 47, **characterised in that** the thermoelectric element (52) is provided in the form of layers.

49. The device according to one of the claims 47 or 48, **characterised in that** the thermoelectric element (52) contains antimony (54) and/or bismuth (53).

50. The device according to one of the claims 1 to 49, **characterised in that** the intensity of the light emitted by the light source (8) is modulated with a frequency which essentially corresponds to the acoustic frequency of an acoustic resonator mode of the photonic band gap structure (10).

51. The device according to claim 50, **characterised in that** a microphone (51) is provided for detection of the acoustic oscillations in the photonic band gap structure (10).

52. The device according to claim 51, **characterised in that** the microphone (51) contains a piezoelectric element.

53. The device according to one of the claims 50 to 52, **characterised in that** a marking (47) is applied to the photonic band gap structure (10) and this marking (47) moves with the frequency at which the photonic band gap structure (10) stimulated by the light oscillates at its natural frequency.

54. The device according to claim 53, **characterised in that** a marking light detector (49) is provided for the optical detection of the movement (50) of the marking (47).

55. The device according to one of the claims 40 to 54, **characterised in that** a filter device (64) is provided for the filtering of the output signal from the detector (11, 51, 49).

56. The device according to claim 55, **characterised in that** the filter (64) is provided to allow passage essentially of the signal component at the frequency corresponding to the frequency of the modulation of the light intensity, the fluid pressure of the fluid to be analysed or the temperature of the photonic band gap structure (10).

57. The device according to one of the claims 14 to 56, **characterised in that** the light is provided essentially for propagation at an angle to the axis of the pores in the photonic band gap structure (10).

58. The device according to one of the claims 14 to 56, **characterised in that** the light is provided essentially for propagation parallel to the axis of the pores in the photonic band gap structure (10).

59. The device according to one of the claims 1 to 58, **characterised in that** a hose-type guide device (12) is provided to feed the fluid (13, 14) to be analysed in the direction of the photonic band gap structure (10).

60. The device according to one of the claims 1 to 59, **characterised in that** a flood device (12) is provided for flooding the photonic band gap structure (10) with the fluid (13, 14) to be analysed.

61. The device according to one of the claims 1 to 60, **characterised in that** the photonic band gap structure (10) is integrated into a micromechanical flow cell.

62. A method for the analysis of the qualitative and/or quantitative composition of fluids using a light source (8) and a detection device (11, 11', 37, 51, 47, 48, 49) for the detection of the interaction of the light emitted by the light source (8) with the fluid (13, 14) in an interaction space area (57), **characterised in that** at least a part of the light from the light source (8) in the region of the interaction space area (57) due to the refractive index periodicity of a photonic band gap structure (10) in the interaction space area (57) propagates at a group velocity that is reduced in comparison with a vacuum and is different from zero, and interacts therein with the fluid (13, 14) to be analysed.

63. The method according to claim 62, **characterised in that** the photonic band gap structure (10) is charged with the fluid (13, 14) to be analysed.

64. The method according to claim 62 or 63, **characterised in that** free spaces (15) in the photonic band gap structure (10) are filled with the fluid (13, 14) to be analysed from one side (61) of the photonic band gap structure (10).

65. The method according to one of the claims 62 to 64, **characterised in that** the fluid to be analysed (13, 14) is passed through the photonic band gap structure (10).

66. The method according to one of the claims 62 to 65, **characterised in that** the intensity of the light emitted by the light source (8) is modulated over time.

67. The method according to one of the claims 62 to 66, **characterised in that** the temperature of the photonic band gap structure (10) is modulated.

68. The method according to one of the claims 62 to 68, **characterised in that** the power with which the light source (8) is supplied is modulated over time.

69. The method according to one of the claims 62 to 68, **characterised in that** the pressure of the fluid (13, 14) to be analysed is modulated over time.

70. The method according to one of the claims 62 to 69, **characterised in that** a chemical reaction in which at least one component of the fluid (13, 14) to be analysed participates is catalysed within the photonic band gap structure (10).

71. The method according to claim 70, **characterised in that** the starting product of the chemical reaction that is catalysed is analysed qualitatively and/or quantitatively.

72. The method according to one of the claims 70 or 71, **characterised in that** the end product of the chemical reaction that is catalysed is analysed qualitatively and/or quantitatively.

73. The method according to one of the claims 62 to 72, **characterised in that** a catalyst (38) is heated.

74. The method according to one of the claims 62 to 73, **characterised in that** a reference analysis of a known reference fluid (42) is carried out.

75. The method according to one of the claims 72 to 74, **characterised in that** the starting signal from the detector (11, 11', 49, 51) is filtered and essentially only those signal components that correspond to a specific modulation frequency are not filtered out.

76. The method according to one of the claims 62 to 75, **characterised in that** the light that falls on the photonic band gap structure (10) is split dispersively.

77. The method according to claim 76, **characterised in that** the light is detected spectrally separated.

78. The method according to claim 62 to 77, **characterised in that** in the photonic band gap structure (10) essentially light propagates that corresponds to an absorption line or absorption band of the fluid component (13, 14) which is being analysed preferably qualitatively and/or quantitatively.

## Revendications

1. Dispositif pour analyser la composition qualitative et/ou quantitative de fluides (13, 14), comprenant :
- au moins une source de lumière (8),
- au moins un domaine spatial d'interaction (57), pouvant être traversé tant au moins partiellement par le fluide (13, 14) qu'également au moins partiellement par la lumière venant de la source de lumière (8), et dans lequel une interaction est possible entre au moins une partie du fluide (13, 14) et une partie de la lumière de la source de lumière (8), et
- au moins un dispositif de détection (11, 11', 51, 47, 48, 49, 37) pour appréhender l'interaction entre le fluide (13, 14) et la lumière de la source de lumière (8),
**caractérisé en ce que**
au moins une structure à bande interdite photonique (10) est prévue et, pour au moins une partie de la lumière de la source de lumière (8) dans la zone du domaine spatial d'interaction (57), du fait de la périodicité d'indice de réfraction de la structure à bande interdite photonique (10), dans le domaine spatial d'interaction (57), au moins concernant une direction de propagation de la lumière, on est en présence d'une vitesse de groupe différente de zéro, diminuée par rapport à ce que l'on a dans le vide.

2. Dispositif selon la revendication 1, **caractérisé en ce que** la source de lumière (8) est polychromatique.

3. Dispositif selon la revendication 1, **caractérisé en ce que** la source de lumière (8) est monochromatique.

4. Dispositif selon l'une des revendications 1 à 3, **caractérisé en ce que** la source de lumière (8) comprend une lampe à incandescence, une diode photoémettrice, un laser, une diode laser, un laser quantique à cascades, une source de lumière luminescente, un émetteur de rayonnement thermique sélectif ou un émetteur de rayonnement noir.

5. Dispositif selon l'une des revendications 1 à 4, **caractérisé en ce que** la source de lumière (8) comprend une source de lumière infrarouge.

6. Dispositif selon l'une des revendications 1 à 5, **caractérisé en ce que** la source de lumière (8) est intégrée spatialement dans la structure à bande interdite photonique (10).

7. Dispositif selon l'une des revendications 1 à 6, **caractérisé en ce que** la source de lumière (8) est intégrée spatialement dans la structure à bande interdite photonique (10), et elle est entourée par une cavité optique.

8. Dispositif selon l'une des revendications 1 à 5, **caractérisé en ce que** la source de lumière (8) est appliquée, sous la forme d'une couche, sur la structure à bande interdite photonique (10).

9. Dispositif selon l'une des revendications 1 à 5, **caractérisé en ce que** le dispositif comprend un espace de rayonnement libre (32) pour la propagation de la lumière de la source de lumière (8) dans la direction de la structure à bande interdite photonique (10).

10. Dispositif selon l'une des revendications 1 à 5, **caractérisé en ce qu'**un guide d'ondes lumineuses est prévu, se présentant sous la forme d'une fibre (33) pour le guidage de la lumière sur le chemin allant de la source de lumière (8) à la structure à bande interdite photonique (10).

11. Dispositif selon l'une des revendications 1 à 5, **caractérisé en ce qu'**un guide d'ondes (34) optique intégré, pour le guidage de la lumière sur le chemin allant de la source de lumière (8) à la structure à bande interdite photonique (10), est prévu.

12. Dispositif selon l'une des revendications 1 à 11, **caractérisé en ce qu'**une périodicité d'indice de réfraction mono, bi ou tridimensionnelle, de la structure à bande interdite photonique (10) est prévue.

13. Dispositif selon l'une des revendications 1 à 12, **caractérisé en ce que** la géométrique de la structure à bande interdite photonique (10) est telle que l'intervalle de bande (7) de la structure à bande interdite photonique (10) est sensiblement juste au-dessus ou juste au-dessous d'une fréquence spécifique de la lumière émise par la source de lumière (8).

14. Dispositif selon l'une des revendications 1 à 13, **caractérisé en ce que**, dans la structure à bande interdite photonique (10), les zones ayant un indice de réfraction (15) diminué ou abaissé sont réalisées par des pores ménagés dans un matériau.

15. Dispositif selon l'une des revendications 1 à 14, **caractérisé en ce que** les pores (15) entourent la zone de la structure à bande interdite photonique (10) ayant l'indice de réfraction diminué, et la géométrie de la structure à bande interdite photonique (10) est telle que l'intervalle de bande (7) est situé juste au-dessous de la fréquence d'une fréquence lumineuse spécifique émise par la source de lumière (8).

16. Dispositif selon l'une des revendications 1 à 15, **caractérisé en ce que** les zones ayant l'indice de réfraction augmenté (59) et l'indice de réfraction diminué (58) présentent la forme de couches.

17. Dispositif selon la revendication 16, **caractérisé en ce que** les couches (58, 59) présentent, le long d'une direction spécifique dans le plan de couche, une variation périodique de leur épaisseur de couche.

18. Dispositif selon l'une des revendications 1 à 15, **caractérisé en ce que** les zones, ayant un indice de réfraction (15) diminué ou augmenté, présentent la forme de colonnes.

19. Dispositif selon la revendication 18, **caractérisé en ce que** les colonnes (15) ont une section transversale circulaire (16), triangulaire (17), tétragonale (18), carrée (18), rectangulaire (19), en forme de losange (20), polygonale (21), ou à forme irrégulière (22) ou hexagonale (23) .

20. Dispositif selon la revendication 18 ou 19, **caractérisé en ce que** les faces frontales des colonnes (15) forment un motif périodique couvrant une surface.

21. Dispositif selon l'une des revendications 18 à 20, **caractérisé en ce que** les faces frontales des colonnes (15) sont prévues en un motif périodique couvrant une surface, avec une cellule unitaire hexagonale (25), rhomboédrique (26), en forme de losange (27), carrée (28) ou rectangulaire (29) .

22. Dispositif selon l'une des revendications 18 à 21, **caractérisé en ce que** les colonnes (15) présentent, le long de leur étendue la plus longue, une périodicité de la surface de section transversale perpendiculairement à la direction d'étendue de longueur maximale.

23. Dispositif selon l'une des revendications 1 à 22, **caractérisé en ce qu'**au moins une partie de la structure à bande interdite photonique (10) comprend des espaces libres (15) ouverts, dont au moins une partie contient le fluide (13, 14) à analyser.

24. Dispositif selon la revendication 23, **caractérisé en ce qu'**au moins une partie des espaces libres (15) sont ouverts sur au moins un côté de la structure à bande interdite photonique (10).

25. Dispositif selon l'une des revendications 23 ou 24, **caractérisé en ce que** les espaces libres (15) sont ouverts sur au moins deux côtés de la structure à bande interdite photonique (10).

26. Dispositif selon l'une des revendications 1 à 25, **caractérisé en ce que** la structure à bande interdite photonique (10) présente sur au moins un côté (35, 36) de la structure à bande interdite photonique (10) un profil d'indice de réfraction présentant un gradient.

27. Dispositif selon la revendication 26, **caractérisé en ce que** le profil d'indice de réfraction présentant un gradient est réalisé par une modification de la longueur de périodicité.

28. Dispositif selon l'une des revendications 26 ou 27, **caractérisé en ce que** le profil d'indice de réfraction présentant un gradient est réalisé par variation des dimensions géométriques des zones ayant un indice de réfraction augmenté et diminué.

29. Dispositif selon l'une des revendications 1 à 28, **caractérisé en ce que** la structure à bande interdite photonique (10) comprend une zone de référence (10'), dans laquelle se trouve un fluide de référence (42), dont les propriétés et la composition peuvent être utilisées comme référence pour la mesure du fluide (13, 14) à analyser.

30. Dispositif selon la revendication 29, **caractérisé en ce que** la zone de référence (10') de la structure à bande interdite photonique (10) est séparée sur au moins un côté du reste de la structure à bande interdite photonique (10).

31. Dispositif selon l'une des revendications 29 ou 30, **caractérisé en ce que** le fluide de référence (42) est inclus dans la zone de référence (10') de la structure à bande interdite photonique (10), d'une façon hermétique, au moyen d'un dispositif de fermeture (41) hermétique.

32. Dispositif selon l'une des revendications 1 à 31, **caractérisé en ce que** la structure à bande interdite photonique (10) présente la forme d'un prisme.

33. Dispositif selon l'une des revendications 1 à 32, **caractérisé en ce que** la structure à bande interdite photonique (10) est configurée de manière que la lumière soit divisée de façon chromatique.

34. Dispositif selon l'une des revendications 1 à 33, **caractérisé en ce que** la structure à bande interdite photonique (10) présente un profil d'indice de réfraction (30, 31) faisant qu'on obtient une division chromatique de la lumière.

35. Dispositif selon l'une des revendications 1 à 34, **caractérisé en ce que**, à l'intérieur du dispositif, par exemple à l'intérieur de la structure à bande interdite photonique (10), est prévu un catalyseur (38) ayant un effet catalytique au moins sur un composant du fluide (13, 14) à analyser.

36. Dispositif selon la revendication 35, **caractérisé en ce que** le catalyseur (38) est prévu en totalité ou au moins en partie sur les faces intérieures des espaces libres (15) qui entourent le fluide (13, 14) à analyser.

37. Dispositif selon l'une des revendications 35 ou 36, **caractérisé en ce qu'**un dispositif de chauffage (63) est prévu pour le chauffage sélectif du catalyseur (38).

38. Dispositif selon l'une des revendications 1 à 37, **caractérisé en ce que** la structure à bande interdite photonique (10) est composée essentiellement d'un matériau pratiquement transparent pour au moins l'une des longueurs d'ondes de la lumière émise par la source de lumière (8).

39. Dispositif selon l'une des revendications 1 à 38, **caractérisé en ce que** la structure à bande interdite photonique (10) est composée essentiellement de silicium, de préférence monocristallin.

40. Dispositif selon l'une des revendications 1 à 39, **caractérisé en ce qu'**est prévu un dispositif de modulation (43) pour moduler temporellement l'intensité lumineuse de la lumière émise par la source de lumière (8).

41. Dispositif selon l'une des revendications 1 à 40, **caractérisé en ce qu'**est prévu un dispositif de modulation de courant (44), pour obtenir la modulation temporelle du courant avec lequel la source de lumière (8) est alimentée.

42. Dispositif selon l'une des revendications 1 à 41, **caractérisé en ce qu'**est prévu un dispositif de modulation de pression de fluide (45) pour obtenir la modulation temporelle de la pression du fluide (13, 14) à analyser.

43. Dispositif selon l'une des revendications 1 à 42, **caractérisé en ce qu'**un dispositif de modulation de température (46) est prévu pour obtenir la modulation temporelle de la température de la structure à bande interdite photonique (10).

44. Dispositif selon l'une des revendications 1 à 43, **caractérisé en ce qu'**est prévu, comme détecteur, un photodétecteur (11) pour la lumière interagissant avec le fluide à analyser.

45. Dispositif selon l'une des revendications 1 à 44, **caractérisé en ce qu'**un détecteur (11) discret est prévu en tant que détecteur.

46. Dispositif selon l'une des revendications 1 à 44, **caractérisé en ce qu'**un photodétecteur (37) en plusieurs parties est prévu pour la détection de la lumière en plusieurs endroits dans le dispositif.

47. Dispositif selon l'une des revendications 1 à 46, **caractérisé en ce qu'**un élément (52) thermoélectrique est prévu comme détecteur.

48. Dispositif selon la revendication 47, **caractérisé en ce que** l'élément (52) thermoélectrique est prévu sous forme de couches.

49. Dispositif selon l'une des revendications 47 ou 48, **caractérisé en ce que** l'élément (52) thermoélectrique contient de l'antimoine (54) et/ou du bismuth (53) .

50. Dispositif selon l'une des revendications 1 à 49, **caractérisé en ce que** l'intensité lumineuse de la lumière rayonnée par la source de lumière (8) est modulée avec une fréquence correspondant sensiblement à la fréquence acoustique d'un mode en résonateur acoustique de la structure à bande interdite photonique (10).

51. Dispositif selon la revendication 50, **caractérisé en ce qu'**un microphone (51) est prévu pour la détection des vibrations acoustiques dans la structure à bande interdite photonique (10).

52. Dispositif selon la revendication 51, **caractérisé en ce que** le microphone (51) comprend un élément piézoélectrique.

53. Dispositif selon l'une des revendications 50 à 52, **caractérisé en ce qu'**un marquage (47) est appliqué sur la structure à bande interdite photonique (10), et ce marquage (47) se déplace à la fréquence à laquelle la structure à bande interdite photonique (10) excitée par la lumière oscille à une fréquence propre.

54. Dispositif selon la revendication 53, **caractérisé en ce qu'**un photodétecteur de marquage (49) est prévu pour la détection optique du mouvement (50) du marquage (47) .

55. Dispositif selon l'une des revendications 40 à 54, **caractérisé en ce qu'**un dispositif de filtration (64) est prévu pour filtrer le signal de sortie d'un détecteur (11, 51, 49).

56. Dispositif selon la revendication 55, **caractérisé en ce que** le filtre (64) est prévu pour le passage essentiellement des composants de signaux à la fréquence correspondant à la fréquence de modulation de l'intensité lumineuse, de la pression de fluide du fluide à analyser ou de la température de la structure à bande interdite photonique (10).

57. Dispositif selon l'une des revendications 14 à 56, **caractérisé en ce que** la lumière est prévue essentiellement pour propagation transversalement à l'axe des pores dans la structure à bande interdite photonique (10).

58. Dispositif selon l'une des revendications 14 à 56, **caractérisé en ce que** la lumière est prévue essentiellement pour propagation parallèlement à l'axe des pores dans la structure à bande interdite photonique (10).

59. Dispositif selon l'une des revendications 1 à 58, **caractérisé en ce qu'**un dispositif d'induction (12), du genre d'un tuyau, est prévu pour induire le fluide (13, 14) à analyser en direction de la structure à bande interdite photonique (10).

60. Dispositif selon l'une des revendications 1 à 59, **caractérisé en ce qu'**un dispositif de noyage (12) est prévu pour noyer la structure à bande interdite photonique (10) avec le fluide (13, 14) à analyser.

61. Dispositif selon l'une des revendications 1 à 60, **caractérisé en ce que** la structure à bande interdite photonique (10) est intégrée dans une cellule de flux micromécanique.

62. Procédé d'analyse de la composition qualitative et/ou quantitative de fluides avec utilisation d'une source de lumière (8) et d'un dispositif de détection (11, 11', 37, 51, 47, 48, 49) pour la détection de l'interaction de la lumière émise par la source de lumière (8) avec le fluide (13, 14), dans un domaine spatial d'interaction (57), **caractérisé en ce qu'**au moins une partie de la lumière de la source de lumière (8) dans la zone du domaine spatial d'interaction (57), du fait de la périodicité de l'indice de réfraction d'une structure à bande interdite photonique (10) dans la zone spatiale d'interaction (57), se propage avec une vitesse de groupe différente de zéro, diminuée par rapport à ce qu'elle est dans le vide, et interagit dans celui-ci avec le fluide (13, 14) à analyser.

63. Procédé selon la revendication 62, **caractérisé en ce que** la structure à bande interdite photonique (10) est sollicitée par le fluide (13, 14) à analyser.

64. Procédé selon la revendication 62 ou 63, **caractérisé en ce que** des espaces libres (15) dans la structure à bande interdite photonique (10) sont remplis par le fluide (13, 14) à analyser, depuis un côté (61) de la structure à bande interdite photonique (10).

65. Procédé selon l'une des revendications 62 à 64, **caractérisé en ce que** le fluide (13, 14) à analyser est passé à travers la structure à bande interdite photonique (10).

66. Procédé selon l'une des revendications 62 à 65, **caractérisé en ce que** l'intensité de la lumière émise par la source de lumière (8) est modulée temporellement.

67. Procédé selon l'une des revendications 62 à 66, **caractérisé en ce que** la température de la structure à bande interdite photonique (10) est modulée.

68. Procédé selon l'une des revendications 62 à 67, **caractérisé en ce que** le courant, avec lequel la source de lumière (8) est alimentée, est modulé temporellement.

69. Procédé selon l'une des revendications 62 à 68, **caractérisé en ce que** la pression du fluide (13, 14) à analyser est modulée temporellement.

70. Procédé selon l'une des revendications 62 à 69, **caractérisé en ce qu'**une réaction chimique, à laquelle participe au moins un composant fluide (13, 14) à analyser, est catalysée à l'intérieur de la structure à bande interdite photonique (10).

71. Procédé selon la revendication 10, **caractérisé en ce que** le produit initial de la réaction chimique qui est catalysée est analysé de façon qualitative et/ou quantitative.

72. Procédé selon l'une des revendications 70 ou 71, **caractérisé en ce que** le produit final de la réaction chimique qui est catalysée est analysé de façon qualitative et/ou quantitative.

73. Procédé selon l'une des revendications 62 à 72, **caractérisé en ce qu'**un catalyseur (38) est chauffé.

74. Procédé selon l'une des revendications 62 à 73, **caractérisé en ce qu'**une analyse de référence d'un fluide de référence (42) connu est effectuée.

75. Procédé selon l'une des revendications 72 à 74, **caractérisé en ce que** le signal de sortie du détecteur (11, 11', 49, 51) est filtré, et pratiquement seuls les composants de signaux correspondant à une fréquence de modulation spécifique ne sont pas éliminés par filtration.

76. Procédé selon l'une des revendications 62 à 75, **caractérisé en ce que** la lumière tombant sur la structure à bande interdite photonique (10) est divisée par voie dispersive.

77. Procédé selon la revendication 76, **caractérisé en ce que** la lumière est détectée en étant soumise à une résolution spectrale.

78. Procédé selon la revendication 62 à 77, **caractérisé en ce que**, dans la structure à bande interdite photonique (10), est propagée essentiellement une lumière correspondant à une ligne d'absorption, ou à une bande d'absorption, de la composante de fluide (13, 14) qui est analysée, de préférence de façon qualitative et/ou quantitative.
